# EUROPEAN PATENT APPLICATION

(11) **EP 4 671 827 A1**
(43) Date of publication of application: **31.12.2025**
(21) Application number: 23923324.0
(22) Date of filing: 22.02.2023
(51) Int. Cl.: G01S 19/13, H04W 72/04, G01S 19/37

(54) **GNSS MEASUREMENT METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/077755
(87) International publication number: WO 2024/174143

(57) **Abstract**

The present disclosure relates to the technical field of communications, and provides a GNSS measurement method, an apparatus, a device, and a storage medium. The method comprises: in response to receiving trigger information sent by a network side device for GNSS measurement, performing GNSS measurement by using a measurement gap. The present disclosure provides a processing method for the situation of "GNSS measurement", so as to provide a GNSS measurement mechanism. For GNSS measurement triggered by the network side device, GNSS measurement can be carried out by means of the measurement gap, thereby reducing the situation that the GNSS measurement cannot be carried out due to an unclear measurement mechanism, and improving the convenience of GNSS measurement.

## Description

### TECHNICAL FIELD

The present disclosure relates to the field of communication technology, and particularly, to a Global Navigation Satellite System (GNSS) measurement method, device, apparatus, and storage medium.

### BACKGROUND

In communication systems, the non-terrestrial network (NTN) is an important technology introduced in the 5^{th} mobile communication technology (5G), which provides a radio resource via a satellite (or drone) rather than a ground station. Some of the Internet of Things (IoT) terminals may not simultaneously perform GNSS reception and LTE reception/transmission.

### SUMMARY

The present disclosure provides a GNSS measurement method, device, apparatus, and storage medium to provide a GNSS measurement mechanism, in which for a GNSS measurement triggered by a network-side device, the GNSS measurement may be performed with a measurement gap, which reduces a case where the GNSS measurement may not be performed due to an undefined measurement mechanism, thereby improving the convenience of the GNSS measurement.

An embodiment in an aspect of the present disclosure provides a global navigation satellite system (GNSS) measurement method performed by a terminal, including:
performing GNSS measurement using a measurement gap in response to receiving trigger information for the GNSS measurement sent by a network-side device.

An embodiment in another aspect of the present disclosure provides a global navigation satellite system (GNSS) measurement method performed by a network-side device, including:
sending trigger information for GNSS measurement to a terminal.

An embodiment in yet another aspect of the present disclosure provides a communication device, including:
a measurement module, configured to perform global navigation satellite system (GNSS) measurement using a measurement gap in response to receiving trigger information for the GNSS measurement sent by a network-side device.

An embodiment in yet another aspect of the present disclosure provides a network device, including:
a sending module, configured to send trigger information for global navigation satellite system (GNSS) measurement to a terminal.

An embodiment in yet another aspect of the present disclosure provides a terminal including a processor and a memory, wherein the memory stores a computer program that, when being executed by the processor, causes the terminal to perform the method as provided in the embodiment in another aspect.

An embodiment in yet another aspect of the present disclosure provides a network-side device including a processor and a memory, wherein the memory stores a computer program that, when being executed by the processor, causes the network-side device to perform the method provided in the embodiment in another aspect.

An embodiment in yet another aspect of the present disclosure provides a communication device including a processor and an interface circuit, wherein
the interface circuit is configured to receive code instructions and send the code instructions to the processor; and
the processor is configured to execute the code instructions to perform the method as provided in the embodiment in an aspect.

An embodiment in yet another aspect of the present disclosure provides a computer-readable storage medium having instructions stored thereon that, when being executed, enable the method provided in the embodiment in an aspect to be implemented.

In summary, in the embodiment of the present disclosure, GNSS measurement is performed using a measurement gap in response to receiving trigger information for the GNSS measurement sent by a network-side device. In the embodiment of the present disclosure, when receiving the GNSS measurement triggered by the network-side device, a terminal may perform the GNSS measurement using the measurement gap, which may improve the convenience of determining GNSS position fix. The present disclosure provides a processing method for the "GNSS measurement" situation to provide a GNSS measurement mechanism. For the GNSS measurement triggered by the network-side device, the GNSS measurement may be performed with the measurement gap, which reduces a case where the GNSS measurement may not be performed due to an undefined measurement mechanism, thereby improving the convenience of the GNSS measurement.

### BRIEF DESCRIPTION OF THE DRAWINGS

The above and/or additional aspects and advantages of the present disclosure will become apparent and readily understood from the following description of embodiments in conjunction with the accompanying drawings, in which:
FIG. 1 is a schematic diagram of a framework of a GNSS measurement system provided by an embodiment of the present disclosure;
FIG. 2 is an example schematic diagram of a transparent mode provided by an embodiment of the present disclosure;
FIG. 3 is an example schematic diagram of a retransmission mode provided by an embodiment of the present disclosure;
FIG. 4 is a flowchart of a GNSS measurement method provided by an embodiment of the present disclosure;
FIG. 5 is a flowchart of a GNSS measurement method provided by yet another embodiment of the present disclosure;
FIG. 6 is a flowchart of a GNSS measurement method provided by yet another embodiment of the present disclosure;
FIG. 7 is a flowchart of a GNSS measurement method provided by yet another embodiment of the present disclosure;
FIG. 8 is a flowchart of a GNSS measurement method provided by yet another embodiment of the present disclosure;
FIG. 9 is a flowchart of a GNSS measurement method provided by yet another embodiment of the present disclosure;
FIG. 10 is a flowchart of a GNSS measurement method provided by yet another embodiment of the present disclosure;
FIG. 11 is an interaction diagram of a GNSS measurement method provided by yet another embodiment of the present disclosure;
FIG. 12 is an interaction diagram of a GNSS measurement method provided by yet another embodiment of the present disclosure;
FIG. 13 is an interaction diagram of a GNSS measurement method provided by yet another embodiment of the present disclosure;
FIG. 14 is a structural diagram of a GNSS measurement system provided by an embodiment of the present disclosure;
FIG. 15 is a structural diagram of a GNSS measurement device provided by another embodiment of the present disclosure;
FIG. 16 is a structural diagram of a GNSS measurement device provided by another embodiment of the present disclosure;
FIG. 17 is a block diagram of a terminal provided by an embodiment of the present disclosure; and
FIG. 18 is a block diagram of a network-side device provided by an embodiment of the present disclosure.

### DETAILED DESCRIPTION

Exemplary embodiments will be described herein in detail, examples of which are represented in the accompanying drawings. When the following description relates to the accompanying drawings, the same reference numeral in different figures indicates the same or similar elements unless otherwise indicated. The implementations described in the following exemplary embodiments do not represent all the implementations consistent with embodiments of the present disclosure. Rather, they are only examples of devices and methods consistent with some aspects of embodiments of the present disclosure as detailed in the appended claims.

The term used in embodiments of the present disclosure is used solely for describing particular embodiments and is not intended to limit embodiments of the present disclosure. The singular forms of "a", "an" and "the" used in embodiments of the present disclosure and the appended claims are also intended to encompass the plural forms unless otherwise indicated. It should also be understood that the term "and/or" as used herein refers to and include any or all possible combinations of one or more associated listed items.

It should be understood that while the terms "first", "second", "third", etc. may be used in embodiments of the present disclosure to describe various information, such information should not be limited by these terms. These terms are only used to distinguish the same type of information from one another. For example, without departing from the scope of embodiments of the present disclosure, first information may also be referred to as second information, and similarly, the second information may be referred to as the first information. Depending on the context, the word "if" as used herein may be interpreted as "at the time of ..." or "when ..." or "in response to determining ...".

The network element or network function involved in embodiments of the present disclosure may be implemented as a standalone hardware device or through software within a hardware device, which is not limited in the embodiments of the present disclosure.

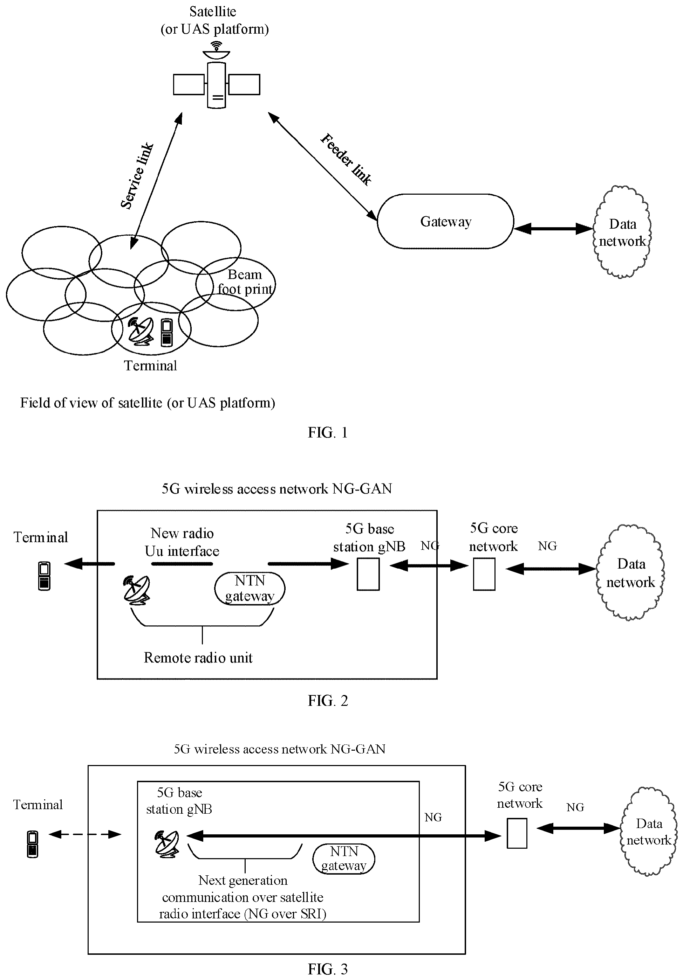

In communication systems, the NTN is an important technology in the 5G, which may provide a radio resource via a satellite (or drone) rather than a ground station. FIG. 1 is a schematic diagram of a framework of a GNSS measurement system provided by an embodiment of the present disclosure. As shown in FIG. 1, the GNSS measurement system includes a terminal which may also be referred to as a user equipment (UE), beam foot print, service link, satellite, unmanned aircraft system (UAS) platform, feeder link, gateway, data network, and field of view of the satellite. Based on different ways in which the satellite processes the signal, a transparent mode and a regeneration mode may be divided.

Furthermore, in an embodiment of the present disclosure, FIG. 2 is an example schematic diagram of a transparent mode provided by an embodiment of the present disclosure. As shown in FIG. 2, an NTN ground station sends a signal from a next-generation base station (gNB) to a satellite, and the satellite converts the signal into a satellite frequency band and then sends the same to the UE via the satellite frequency band. The satellite performs frequency conversion and signal amplification without demodulating the gNB signal. The satellite may function like a repeater. A 5G base station is referred to as gNB, which provides the UE with New Radio (NR) user plane and control plane protocol, terminal node, and connects to a 5G core network (5GC) via an NG interface.

Furthermore, in an embodiment of the present disclosure, FIG. 3 is an example schematic diagram of a retransmission mode provided by an embodiment of the present disclosure. As shown in FIG. 3, after an NTN ground station send a gNB signal to a satellite, the satellite demodulates and decodes the signal, then re-encodes and modulates the signal (which process is called regeneration) and sends the regenerated signal via the satellite frequency band.

Furthermore, in an embodiment of the present disclosure, Table 1 is a satellite altitude, orbit, and satellite coverage range of a typical NTN network provided by an embodiment of the present disclosure:

**Table 1**

| Platforms | Altitude range | Orbit | Typical beam footprint size |
|---|---|---|---|
| Low-Earth Orbit (LEO) satellite | 300-1500km | Circular around the earth | 100-1000km |
| Medium-Earth Orbit (MEO) satellite | 7000-25000km | | 100-1000km |
| Geostationary Earth Orbit (GEO) satellite | 35786km | notional station keeping position fixed in terms of elevation/azimuth with respect to a given earth point | 200-3500km |
| UAS platform (including HAPS) | 8-50km (20km for HAPS) | | 5-200km |
| High Elliptical Orbit (HEO) satellite | 400-50000km | Elliptical around the earth | 200-3500km |

Furthermore, in an embodiment of the present disclosure, some of the Internet of Things (IoT) terminals may not simultaneously perform GNSS reception and long term evolution (LTE) reception/transmission. The validity of GNSS position fix obtained by the terminal may only be maintained for a certain period of time, and after that time, the GNSS of the terminal is outdated. The terminal needs to reacquire GNSS. The terminal does not support simultaneous GNSS reception and LTE transmission/reception and may only perform one thereof. In the solution of Release 17 (R17), the terminal returns to an idle state after the GNSS is outdated.

A GNSS measurement method, device, apparatus and storage medium provided by embodiments of the present disclosure will be described in details below with reference to the accompanying drawings.

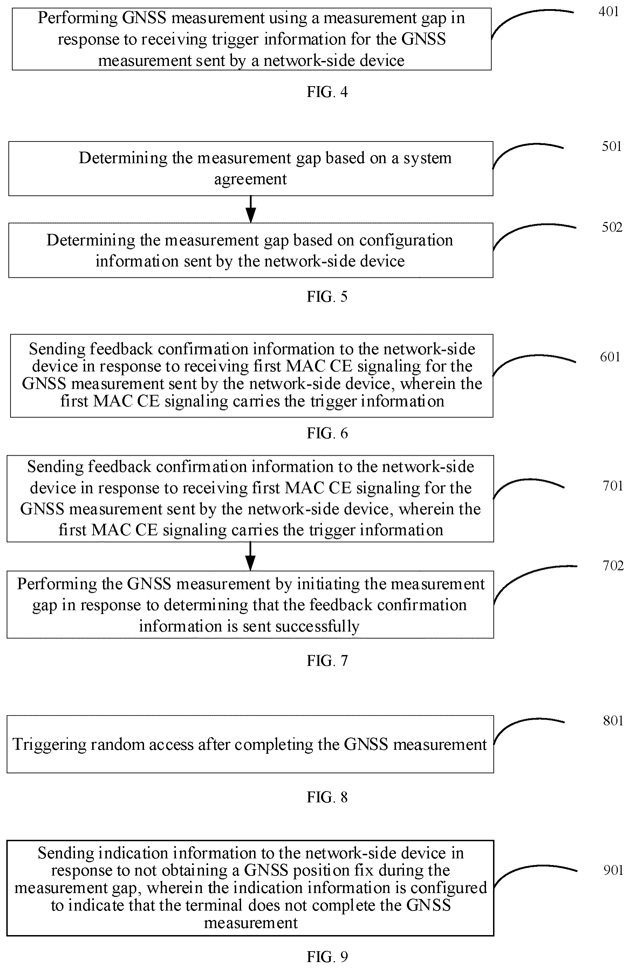

FIG. 4 is a flowchart of a GNSS measurement method provided by an embodiment of the present disclosure, which is executed by a terminal. As shown in FIG. 4, the method may include:
step 401, performing GNSS measurement using a measurement gap in response to receiving trigger information for the GNSS measurement sent by a network-side device.

It should be noted that in an embodiment of the present disclosure, the executing entity of the present disclosure may be, for example, a terminal. The terminal may be a device that provides voice and/or data connectivity to a user. The terminal may communicate with one or more core networks via a Radio Access Network (RAN). The terminal may be an IoT terminal such as a sensor device, a mobile phone (or cellular phone), or a computer with an IoT terminal, which may be, for example, a fixed, portable, pocket-sized, handheld, computer-embedded, or vehicle-mounted device, for example, a station (STA), a subscriber unit, a subscriber station, a mobile station, a mobile, a remote station, an access point, a remote terminal, an access terminal, a user terminal, a user agent, or a user equipment (UE). Alternatively, the terminal may be an unmanned aerial vehicle device. Alternatively, the terminal may be an in-vehicle device, e.g., it may be a trip computer with a wireless communication capability, or a wireless terminal externally connected to a trip computer. Alternatively, the terminal may be a roadside device, e.g., it may be a street light, a signal light, or other roadside devices having a wireless communication capability.

In an embodiment of the present disclosure, the embodiment of the present disclosure may be applied to an IoT NTN scenario. The terminal of the present disclosure may, for example, be an IoT NTN terminal.

In an embodiment of the present disclosure, for example, the trigger information may refer to information configured to trigger the GNSS measurement. The trigger information may, for example, be sent from the network-side device to the terminal. The trigger information may be also referred to as, for example, "instruction information", which is not limited in the embodiment of the present disclosure.

Furthermore, in an embodiment of the present disclosure, the measurement gap may, for example, refer to a time interval. The terminal performs the GNSS measurement within the measurement gap. For example, the terminal may only perform the GNSS measurement within the measurement gap, without performing other measurements or uplink/downlink transmissions. The measurement gap does not specifically refer to a fixed time interval. For example, when a duration corresponding to the measurement gap changes, the measurement gap may also change accordingly.

Furthermore, in an embodiment of the present disclosure, the method further includes at least one of:
determining the measurement gap based on a system agreement; or
determining the measurement gap based on configuration information sent by the network-side device.

Furthermore, in an embodiment of the present disclosure, the terminal may determine the measurement gap based on the system agreement.

Furthermore, in an embodiment of the present disclosure, the terminal may determine the measurement gap based on the configuration information sent by the network-side device.

Furthermore, in an embodiment of the present disclosure, the terminal may determine the measurement gap based on the system agreement, or may determine the measurement gap based on the configuration information sent by the network-side device.

Furthermore, in an embodiment of the present disclosure, the method further includes at least one of:
determining a duration of the measurement gap based on the system agreement; or
determining a start time offset of the measurement gap based on the system agreement.

For example, in an embodiment of the present disclosure, when the measurement gap is agreed by a system, the system may specify a fixed measurement gap duration. Furthermore, the system may specify a start time offset for the measurement gap. The start time offset of the measurement gap may, for example, be a time offset of starting the GNSS measurement.

Furthermore, in an embodiment of the present disclosure, the method further includes:
determining a start position corresponding to the start time offset of the measurement gap in response to receiving the trigger information for the GNSS measurement sent by the network-side device.

For example, in an embodiment of the present disclosure, for the start time offset of the measurement gap, the position corresponding to the start time offset of the measurement gap may, for example, be a receiving time at which the terminal receives the trigger information.

For example, in an embodiment of the present disclosure, for the start time offset of the measurement gap, the position corresponding to the start time offset of the measurement gap may be, for example, a receiving time at which the terminal receives the trigger information, plus a time required for the terminal to process the trigger information.

For example, in an embodiment of the present disclosure, the start time offset of the measurement gap does not specifically refer to a fixed value. For example, when the specific value corresponding to the start time offset of the measurement gap changes, the start time offset of the measurement gap may also change accordingly. The start time offset of the measurement gap may, for example, be 0 or another value. The unit of the start time offset of the measurement gap may be at least one of minute, second, millisecond, subframe, slot counts, or symbol counts, etc.

Furthermore, in an embodiment of the present disclosure, performing the GNSS measurement using the measurement gap in response to receiving the trigger information for the GNSS measurement sent by the network-side device includes:
performing the GNSS measurement using the measurement gap in response to receiving first medium access control-control element (MAC CE) signaling for the GNSS measurement sent by the network-side device, wherein the first MAC CE signaling carries the trigger information.

For example, in an embodiment of the present disclosure, when the terminal receives the first MAC CE signaling for the GNSS measurement sent by the network-side device, the terminal may perform the GNSS measurement during the duration of the agreed measurement gap from the start time offset of the agreed measurement gap.

For example, in an embodiment of the present disclosure, when the terminal receives the first MAC CE signaling for the GNSS measurement sent by the network-side device, the terminal may perform the GNSS measurement during the duration of the agreed measurement gap until the GNSS positioning fix is measured or the time expires.

For example, in an embodiment of the present disclosure, the first MAC CE signaling may be used as signaling for triggering the GNSS measurement. The first MAC CE signaling is solely used to distinguish from other MAC CE signaling.

Furthermore, in an embodiment of the present disclosure, the first MAC CE signaling also carries configuration information.

For example, in an embodiment of the present disclosure, the measurement gap may, for example, be configured by the network-side device. The network-side device may, for example, carry the configuration information in the MAC CE signaling. The configuration information is used to configure the measurement gap. The MAC CE signaling may, for example, be the first MAC CE signaling or another MAC CE signaling. For example, the network-side device may send the first MAC CE signaling to the terminal. The first MAC CE signaling carries both the trigger information and the configuration information.

For example, in an embodiment of the present disclosure, the network-side device may, for example, send the first MAC CE signaling to the terminal. The first MAC CE signaling carries the trigger information. The network-side device may further send MAC CE signaling carrying the configuration information to the terminal.

Furthermore, in an embodiment of the present disclosure, determining the measurement gap based on the configuration information sent by the network-side device includes:
determining the measurement gap based on first radio resource control (RRC) signaling sent by the network-side device, wherein the first RRC signaling carries the configuration information.

For example, in an embodiment of the present disclosure, the measurement gap may, for example, be configured by the network-side device. The network-side device may, for example, configure the measurement gap via the RRC signaling. The RRC signaling may be the first RRC signaling. The first RRC signaling may be signaling carrying the configuration information. The first RRC signaling is used solely to distinguish from other RRC signaling.

Furthermore, in an embodiment of the present disclosure, the configuration information further includes at least one of:
a duration of the measurement gap;
a start time offset of the measurement gap; or
a start time of the measurement gap.

For example, in an embodiment of the present disclosure, the configured duration of the measurement gap may, for example, include at least one of:
a coefficient value a; or
an offset value b.

For example, in an embodiment of the present disclosure, the actual duration of the measurement gap determined by the terminal is a * GNSS position fix duration reported by the terminal + offset value b.

For example, in an embodiment of the present disclosure, the coefficient value a and the offset value b may be agreed by a protocol. For example, a = 1, b = 0.

Furthermore, in an embodiment of the present disclosure, the start time offset of the measurement gap includes at least one of:
a time offset relative to a time when the terminal receives the first MAC CE signaling; or
a time offset relative to a configured start time of the measurement gap.

For example, in an embodiment of the present disclosure, the start time offset of the measurement gap may, for example, be the time offset relative to the time when the terminal receives the first MAC CE signaling.

For example, in an embodiment of the present disclosure, the start time offset of the measurement gap may, for example, be the time offset relative to the configured start time of the measurement gap.

For example, in an embodiment of the present disclosure, the start time offset of the measurement gap may, for example, be the time offset relative to the time when the terminal receives the first MAC CE signaling, or the time offset relative to the configured start time of the measurement gap.

For example, in an embodiment of the present disclosure, when the terminal receives the first MAC CE signaling for the GNSS measurement sent by the network-side device, the terminal may add the delay of processing the first MAC CE signaling to the start time offset of the measurement gap. For example, when the terminal receives the first MAC CE signaling for the GNSS measurement sent by the network-side device, the terminal may perform the GNSS measurement during the agreed duration of the measurement gap from the delay of processing the first MAC CE signaling plus the agreed start time offset of the measurement gap, until the GNSS positioning fix is measured or the time expires.

For example, in an embodiment of the present disclosure, the unit of the start time of the measurement gap may be absolute time, which may be represented by Hyper System Frame Number (Hyper SFN), System Frame Number (SFN), or SFN+subframe number, Hyper SFN+SFN, or Hyper SFN+SFN+subframe number. The unit of the start time of the measurement gap may also be relative time, i.e., a relative time with respect to the configuration receiving time of the measurement gap, and the unit thereof may be minute, second, millisecond, subframe, slot counts, symbol counts, etc.

Furthermore, in an embodiment of the present disclosure, the method further includes at least one of:
determining the start time offset of the measurement gap be a first default value in response to the configuration information not indicating the start time offset of the measurement gap;
determining the duration of the measurement gap be a second default value in response to the configuration information not indicating the duration of the measurement gap; or
determining the start time of the measurement gap based on the start time of the measurement gap being a first time of receiving the first MAC CE signaling for the GNSS measurement sent by the network-side device in response to the configuration information not indicating the start time of the measurement gap.

For example, in an embodiment of the present disclosure, in response to the configuration information not indicating the start time offset of the measurement gap, the start time offset of the measurement gap is determined to be the first default value.

For example, in an embodiment of the present disclosure, in response to the configuration information not indicating the duration of the measurement gap, the duration of the measurement gap is determined to be the second default value.

For example, in an embodiment of the present disclosure, in response to the configuration information not indicating the start time of the measurement gap, the start time of the measurement gap is determined based on the start time of the measurement gap being the first time of receiving the first MAC CE signaling for the GNSS measurement sent by the network-side device.

For example, in an embodiment of the present disclosure, the first default value may, for example, be used to refer to a default value corresponding to the start time offset of the measurement gap. The first default value may, for example, be 0.

For example, in an embodiment of the present disclosure, the second default value may, for example, be used to refer to a default value corresponding to the duration of the measurement gap. The first default value may, for example, be 1 second.

For example, in an embodiment of the present disclosure, the first time may, for example, be the time when the terminal receives the first MAC CE signal.

Furthermore, in an embodiment of the present disclosure, the method further includes:
determining a first time of receiving the first MAC CE signaling for the GNSS measurement sent by the network-side device be a start time of the measurement gap.

For example, in an embodiment of the present disclosure, the unit of the start time of the measurement gap may be absolute time, which may be represented by Hyper System Frame Number (Hyper SFN), System Frame Number (SFN), or SFN+subframe number, Hyper SFN+SFN, or Hyper SFN+SFN+subframe number. The unit of the start time of the measurement gap may also be relative time, i.e., a relative time with respect to the configuration receiving time of the measurement gap, and the unit thereof may be minute, second, millisecond, subframe, slot counts, symbol counts, etc.

Furthermore, in an embodiment of the present disclosure, determining the first time of receiving the first MAC CE signaling for triggering the GNSS measurement sent by the network-side device be the start time of the measurement gap includes:
determining a start time of the measurement gap based on at least one of a processing delay of the first MAC CE signaling or the start time offset of the measurement gap and based on the first time of receiving the first MAC CE signaling for the GNSS measurement sent by the network-side device.

For example, in an embodiment of the present disclosure, the start time of the measurement gap may, for example, be an activation time of the measurement gap, which name is not limited in the present disclosure.

For example, in an embodiment of the present disclosure, the start time of the measurement gap may, for example, be the first time.

For example, in an embodiment of the present disclosure, the start time of the measurement gap may, for example, be the first time plus the processing delay for processing the first MAC CE signaling.

For example, in an embodiment of the present disclosure, the start time of the measurement gap may, for example, be the first time plus the start time offset of the measurement gap.

For example, in an embodiment of the present disclosure, the start time of the measurement gap may, for example, be the first time plus the processing delay for processing the first MAC CE signaling plus the start time offset of the measurement gap.

Furthermore, in an embodiment of the present disclosure, the processing delay of the first MAC CE signaling is a system-defined value.

For example, in an embodiment of the present disclosure, an end time of the measurement gap is the start time of the measurement gap plus the duration of the measurement gap.

Furthermore, in an embodiment of the present disclosure, the method further includes:
sending feedback confirmation information to the network-side device in response to receiving first MAC CE signaling for the GNSS measurement sent by the network-side device, wherein the first MAC CE signaling carries the trigger information.

For example, in an embodiment of the present disclosure, the terminal may send the feedback confirmation information to the network-side device after receiving the first MAC CE signaling sent by the network-side device.

Furthermore, in an embodiment of the present disclosure, sending the feedback confirmation information to the network-side device includes at least one of:
sending second MAC CE signaling to the network-side device, wherein the second MAC CE signaling carries the feedback confirmation information; or
sending a hybrid automatic repeat request acknowledgement (HARQ ACK) to the network-side device, wherein the HARQ ACK carries the feedback confirmation information.

For example, in an embodiment of the present disclosure, in response to receiving the first MAC CE signaling for the GNSS measurement sent by the network-side device, the terminal sends the second MAC CE signaling to the network-side device, wherein the second MAC CE signaling carries the feedback confirmation information.

For example, in an embodiment of the present disclosure, in response to receiving the first MAC CE signaling for the GNSS measurement sent by the network-side device, the terminal sends the hybrid automatic repeat request acknowledgement (HARQ ACK) to the network-side device, wherein the HARQ ACK carries the feedback confirmation information.

For example, in an embodiment of the present disclosure, in response to receiving the first MAC CE signaling for the GNSS measurement sent by the network-side device, the terminal sends the second MAC CE signaling to the network-side device, wherein the second MAC CE signaling carries the feedback confirmation information; or sends the hybrid automatic repeat request acknowledgement (HARQ ACK) to the network-side device, wherein the HARQ ACK carries the feedback confirmation information.

Furthermore, in an embodiment of the present disclosure, performing the GNSS measurement using the measurement gap in response to receiving the trigger information for the GNSS measurement sent by the network-side device includes:
sending feedback confirmation information to the network-side device in response to receiving first MAC CE signaling for the GNSS measurement sent by the network-side device, wherein the first MAC CE signaling carries the trigger information; and
performing the GNSS measurement by initiating the measurement gap in response to determining that the feedback confirmation information is sent successfully.

For example, in an embodiment of the present disclosure, the terminal initiates the measurement gap only after the confirmation information fed back to the network is successfully sent, for example, the terminal may initiate the measurement gap to perform the GNSS measurements.

Furthermore, in an embodiment of the present disclosure, performing the GNSS measurement by initiating the measurement gap in response to determining that the feedback confirmation information is sent successfully includes:
determining that the feedback confirmation information is sent successfully in response to receiving a positive HARQ ACK feedback for a medium access control protocol data unit (MAC PDU) carrying confirmation information, and performing the GNSS measurement by initiating the measurement gap.

For example, in an embodiment of the present disclosure, the method further includes:
determining a second time of receiving the positive HARQ ACK feedback for the MAC PDU carrying the confirmation information be a start time of the measurement gap.

For example, in an embodiment of the present disclosure, the start time of the measurement gap may, for example, be configured to have an offset relative to the first time of receiving the first MAC CE for the GNSS measurement sent by the network device. During the offset time, the terminal may feedback the confirmation information and determine whether the confirmation information is sent successfully to the network. If it is sent successfully, the measurement gap is initiated after the start time of the measurement gap reaches; and if it is not sent successfully within the offset time, the measurement gap is not initiated.

For example, in an embodiment of the present disclosure, the start time of the measurement gap may, for example, be a second time of receiving the positive HARQ ACK feedback for MAC PDU carrying the confirmation information.

For example, in an embodiment of the present disclosure, the start time of the measurement gap may be determined based on at least one of the configured start time offset of the measurement gap or the system-agreed start time offset of the measurement gap and based on the second time of receiving the positive HARQ ACK feedback for MAC PDU carrying the confirmation information.

Furthermore, in an embodiment of the present disclosure, the method further includes:
triggering random access after completing the GNSS measurement.

Furthermore, in an embodiment of the present disclosure, the method further includes:
sending indication information to the network-side device in response to not obtaining a GNSS position fix during the measurement gap, wherein the indication information is configured to indicate that the terminal does not complete the GNSS measurement.

Furthermore, in an embodiment of the present disclosure, sending the indication information to the network-side device includes at least one of:
sending third MAC CE signaling to the network-side device, wherein the third MAC CE signaling carries the indication information; or
sending second RRC signaling to the network-side device, wherein the second RRC signaling carries the indication information.

For example, in an embodiment of the present disclosure, the third MAC CE signaling may be a MAC CE command carrying the indication information and sent by the terminal to the network-side device. The term "third" in the third MAC CE signaling is used solely to distinguish from other MAC CE signaling.

For example, in an embodiment of the present disclosure, the second RRC signaling may be RRC signaling carrying the indication information and sent by the terminal to the network-side device. The term "second" in the second RRC signaling is used solely to distinguish from other RRC signaling.

For example, in an embodiment of the present disclosure, the terminal sends the third MAC CE signaling to the network-side device, wherein the third MAC CE signaling carries the indication information, and the indication information is used to indicate that the terminal does not complete the GNSS measurement.

For example, in an embodiment of the present disclosure, the terminal sends the second RRC signaling to the network-side device, wherein the second RRC signaling carries the indication information, and the indication information is used to indicate that the terminal does not complete the GNSS measurement.

For example, in an embodiment of the present disclosure, the terminal sends the third MAC CE signaling to the network-side device, wherein the third MAC CE signaling carries the indication information; or sends the second RRC signaling to the network-side device, wherein the second RRC signaling carries the indication information, and the indication information is used to indicate that the terminal does not complete the GNSS measurement.

Furthermore, in an embodiment of the present disclosure, the method further includes:
triggering send receive (SR) in response to that no uplink resources are available for sending the third MAC CE signaling.

Furthermore, in an embodiment of the present disclosure, sending the third MAC CE signaling to the network-side device includes:
sending GNSS validity duration MAC CE signaling to the network-side device, wherein the GNSS validity duration MAC CE signaling carries a special value, and the special value is configured to indicate that the terminal does not complete the GNSS measurement.

For example, in an embodiment of the present disclosure, the special value does not specifically refer to a fixed value. The special value may, for example, be 0, and the special value may, for example, also be -1.

The implementations or embodiments of the present disclosure are not exhaustive and are merely illustrative of some implementations or embodiments, and do not constitute specific limitations on the protection scope of the present disclosure. If there is no contradiction, each step in a particular implementation or embodiment may be implemented as an independent embodiment, and the steps may be arbitrarily combined. For example, a solution obtained by removing certain steps from a particular implementation or embodiment may also be implemented as an independent embodiment, and the order of the steps in a particular implementation or embodiment may be arbitrarily swapped. Furthermore, the optional methods or examples in a particular implementation or embodiment may be arbitrarily combined. Furthermore, different implementations or embodiments may be arbitrarily combined, for example, some or all steps from different implementations or embodiments may be arbitrarily combined, and an implementation or embodiment may be arbitrarily combined with optional methods or optional examples from other implementations or embodiments.

In some implementations or embodiments, the terms "in response to ...", 'in the case of ...", "at the time of ...", "when ...", "if ..." may be interchangeably used.

In some implementations or embodiments, the recitations "A or B", "A and/or B", "at least one of A and B", "A in one case and B in another case", "in response to one case A and in response to another case B", etc. in the present disclosure may include at least one of the following technical solutions depending on situation: executing A independently of B, i.e., A in some implementations or embodiments; executing B independently of A, i.e., B in some implementations or embodiments; selectively executing A or B, i.e., selecting to execute either A or B in some implementations or embodiments; and executing both A and B, i.e., A and B in some implementations or embodiments.

In some implementations or embodiments, the recitations "including A", "comprising A", "indicating A" and "carrying A" in the present disclosure may be interpreted as directly carrying A or indirectly indicating A.

Furthermore, each element, row, or column in the table involved in the present disclosure may be implemented as an independent embodiment, and any combination of elements, rows, or columns may also be implemented as an independent embodiment.

In summary, in the embodiment of the present disclosure, GNSS measurement is performed using a measurement gap in response to receiving trigger information for the GNSS measurement sent by a network-side device. In the embodiment of the present disclosure, when receiving the GNSS measurement triggered by the network-side device, a terminal may perform the GNSS measurement using the measurement gap, which may improve the convenience of determining GNSS position fix. The present disclosure provides a processing method for the "GNSS measurement" situation to provide a GNSS measurement mechanism. For the GNSS measurement triggered by the network-side device, the GNSS measurement may be performed with the measurement gap, which reduces a case where the GNSS measurement may not be performed due to an undefined measurement mechanism, thereby improving the convenience of the GNSS measurement.

FIG. 5 is a flowchart of a GNSS measurement method provided by an embodiment of the present disclosure. The method is executed by the terminal, and as shown in FIG. 5, may include at least one of:
step 501, determining the measurement gap based on a system agreement; or
step 502, determining the measurement gap based on configuration information sent by the network-side device.

Furthermore, in an embodiment of the present disclosure, the method further includes at least one of:
determining a duration of the measurement gap based on the system agreement; or
determining a start time offset of the measurement gap based on the system agreement.

Furthermore, in an embodiment of the present disclosure, the method further includes:
determining a start position corresponding to the start time offset of the measurement gap in response to receiving the trigger information for the GNSS measurement sent by the network-side device

For example, in an embodiment of the present disclosure, for the start time offset of the measurement gap, the position corresponding to the start time offset of the measurement gap may, for example, be a receiving time at which the terminal receives the trigger information.

For example, in an embodiment of the present disclosure, for the start time offset of the measurement gap, the position corresponding to the start time offset of the measurement gap may be, for example, a receiving time at which the terminal receives the trigger information, plus a time required for the terminal to process the trigger information.

For example, in an embodiment of the present disclosure, the start time offset of the measurement gap does not specifically refer to a fixed value. For example, when the specific value corresponding to the start time offset of the measurement gap changes, the start time offset of the measurement gap may also change accordingly. The start time offset of the measurement gap may, for example, be 0 or another value. The unit of the start time offset of the measurement gap may be at least one of minute, second, millisecond, subframe, slot counts, or symbol counts, etc.

Furthermore, in an embodiment of the present disclosure, performing the GNSS measurement using the measurement gap in response to receiving the trigger information for the GNSS measurement sent by the network-side device includes:
performing the GNSS measurement using the measurement gap in response to receiving first medium access control-control element (MAC CE) signaling for the GNSS measurement sent by the network-side device, wherein the first MAC CE signaling carries the trigger information.

For example, in an embodiment of the present disclosure, when the terminal receives the first MAC CE signaling for the GNSS measurement sent by the network-side device, the terminal may perform the GNSS measurement during the duration of the agreed measurement gap from the start time offset of the agreed measurement gap.

For example, in an embodiment of the present disclosure, when the terminal receives the first MAC CE signaling for the GNSS measurement sent by the network-side device, the terminal may perform the GNSS measurement during the duration of the agreed measurement gap until the GNSS positioning fix is measured or the time expires.

For example, in an embodiment of the present disclosure, the first MAC CE signaling may be used as signaling for triggering the GNSS measurement. The first MAC CE signaling is solely used to distinguish from other MAC CE signaling.

Furthermore, in an embodiment of the present disclosure, the first MAC CE signaling also carries configuration information.

For example, in an embodiment of the present disclosure, the measurement gap may, for example, be configured by the network-side device. The network-side device may, for example, carry the configuration information in the MAC CE signaling. The configuration information is used to configure the measurement gap. The MAC CE signaling may, for example, be the first MAC CE signaling or another MAC CE signaling. For example, the network-side device may send the first MAC CE signaling to the terminal. The first MAC CE signaling carries both the trigger information and the configuration information.

For example, in an embodiment of the present disclosure, the network-side device may, for example, send the first MAC CE signaling to the terminal. The first MAC CE signaling carries the trigger information. The network-side device may further send MAC CE signaling carrying the configuration information to the terminal.

Furthermore, in an embodiment of the present disclosure, determining the measurement gap based on the configuration information sent by the network-side device includes:
determining the measurement gap based on first radio resource control (RRC) signaling sent by the network-side device, wherein the first RRC signaling carries the configuration information.

For example, in an embodiment of the present disclosure, the measurement gap may, for example, be configured by the network-side device. The network-side device may, for example, configure the measurement gap via the RRC signaling. The RRC signaling may, for example, be the first RRC signaling. The first RRC signaling may be signaling carrying the configuration information. The first RRC signaling is used solely to distinguish from other RRC signaling.

Furthermore, in an embodiment of the present disclosure, the configuration information further includes at least one of:
a duration of the measurement gap;
a start time offset of the measurement gap; or
a start time of the measurement gap.

For example, in an embodiment of the present disclosure, the configured duration of the measurement gap may, for example, include at least one of:
a coefficient value a; or
an offset value b.

For example, in an embodiment of the present disclosure, the actual duration of the measurement gap determined by the terminal is a * GNSS position fix duration reported by the terminal + offset value b.

For example, in an embodiment of the present disclosure, the coefficient value a and the offset value b may be agreed by a protocol. For example, a = 1, b = 0.

Furthermore, in an embodiment of the present disclosure, the start time offset of the measurement gap includes at least one of:
a time offset relative to a time when the terminal receives the first MAC CE signaling; or
a time offset relative to a configured start time of the measurement gap.

For example, in an embodiment of the present disclosure, the start time offset of the measurement gap may, for example, be the time offset relative to the time when the terminal receives the first MAC CE signaling.

For example, in an embodiment of the present disclosure, the start time offset of the measurement gap may, for example, be the time offset relative to the configured start time of the measurement gap.

For example, in an embodiment of the present disclosure, the start time offset of the measurement gap may, for example, be the time offset relative to the time when the terminal receives the first MAC CE signaling, or the time offset relative to the configured start time of the measurement gap.

For example, in an embodiment of the present disclosure, when the terminal receives the first MAC CE signaling for the GNSS measurement sent by the network-side device, the terminal may add the delay of processing the first MAC CE signaling to the start time offset of the measurement gap. For example, when the terminal receives the first MAC CE signaling for the GNSS measurement sent by the network-side device, the terminal may perform the GNSS measurement during the agreed duration of the measurement gap from the delay of processing the first MAC CE signaling plus the agreed start time offset of the measurement gap, until the GNSS positioning fix is measured or the time expires.

For example, in an embodiment of the present disclosure, the unit of the start time of the measurement gap may be absolute time, which may be represented by Hyper System Frame Number (Hyper SFN), System Frame Number (SFN), or SFN+subframe number, Hyper SFN+SFN, or Hyper SFN+SFN+subframe number. The unit of the start time of the measurement gap may also be relative time, i.e., a relative time with respect to the configuration receiving time of the measurement gap, and the unit thereof may be minute, second, millisecond, subframe, slot counts, symbol counts, etc.

Furthermore, in an embodiment of the present disclosure, the method further includes at least one of:
determining the start time offset of the measurement gap be a first default value in response to the configuration information not indicating the start time offset of the measurement gap;
determining the duration of the measurement gap be a second default value in response to the configuration information not indicating the duration of the measurement gap; or
determining the start time of the measurement gap based on the start time of the measurement gap being a first time of receiving the first MAC CE signaling for the GNSS measurement sent by the network-side device in response to the configuration information not indicating the start time of the measurement gap.

For example, in an embodiment of the present disclosure, the first default value may, for example, be used to refer to a default value corresponding to the start time offset of the measurement gap. The first default value may, for example, be 0.

For example, in an embodiment of the present disclosure, the second default value may, for example, be used to refer to a default value corresponding to the duration of the measurement gap. The first default value may, for example, be 1 second.

For example, in an embodiment of the present disclosure, the first time may, for example, be the time when the terminal receives the first MAC CE signal.

Furthermore, in an embodiment of the present disclosure, the method further includes:
determining a first time of receiving the first MAC CE signaling for the GNSS measurement sent by the network-side device be a start time of the measurement gap.

For example, in an embodiment of the present disclosure, the unit of the start time of the measurement gap may be absolute time, which may be represented by Hyper System Frame Number (Hyper SFN), System Frame Number (SFN), or SFN+subframe number, Hyper SFN+SFN, or Hyper SFN+SFN+subframe number. The unit of the start time of the measurement gap may also be relative time, i.e., a relative time with respect to the configuration receiving time of the measurement gap, and the unit thereof may be minute, second, millisecond, subframe, slot counts, symbol counts, etc.

Furthermore, in an embodiment of the present disclosure, determining the first time of receiving the first MAC CE signaling for triggering the GNSS measurement sent by the network-side device be the start time of the measurement gap includes:
determining a start time of the measurement gap based on at least one of a processing delay of the first MAC CE signaling or the start time offset of the measurement gap and based on the first time of receiving the first MAC CE signaling for the GNSS measurement sent by the network-side device.

For example, in an embodiment of the present disclosure, the start time of the measurement gap may, for example, be an activation time of the measurement gap, which name is not limited in the present disclosure.

For example, in an embodiment of the present disclosure, the start time of the measurement gap may, for example, be the first time.

For example, in an embodiment of the present disclosure, the start time of the measurement gap may, for example, be the first time plus the processing delay for processing the first MAC CE signaling.

For example, in an embodiment of the present disclosure, the start time of the measurement gap may, for example, be the first time plus the start time offset of the measurement gap.

For example, in an embodiment of the present disclosure, the start time of the measurement gap may, for example, be the first time plus the processing delay for processing the first MAC CE signaling plus the start time offset of the measurement gap.

Furthermore, in an embodiment of the present disclosure, the processing delay of the first MAC CE signaling is a system-defined value.

For example, in an embodiment of the present disclosure, an end time of the measurement gap is the start time of the measurement gap plus the duration of the measurement gap.

In an embodiment of the present disclosure, the description of steps 501-502 may refer to the description of step 401, which is not limited here in the embodiment of the present disclosure. The optional examples in the embodiment of the present disclosure may be arbitrarily combined, and if there is no contradiction, the embodiment of the present disclosure may be combined with steps from other embodiments or optional examples from other embodiments.

It should be noted that in the embodiment of the present disclosure, the terminal may execute at least one of steps 501 and 502, and may include at least one of the following solutions depending on situation: executing step 502 independently of step 501, i.e., executing step 502 in some implementations; executing step 501 independently of step 502, i.e., executing step 501 in some implementations; selectively executing step 501 and step 502, i.e., selecting to execute either step 501 or step 502 in some implementations; and executing both step 501 and step 502, i.e., executing both step 501 and step 502 in some implementations.

In summary, in the embodiments of the present disclosure, the embodiment includes at least one of: determining the measurement gap based on a system agreement; or determining the measurement gap based on configuration information sent by the network-side device. In the embodiments of the present disclosure, a configuration mechanism of the measurement gap may be provided, which reduces a case where the GNSS measurement may not be performed since the measurement gap cannot be determined, thereby improving the convenience of the GNSS measurement, and thus improving the convenience of determining the GNSS position fix.

FIG. 6 is a flowchart of a GNSS measurement method provided by an embodiment of the present disclosure, which is executed by the terminal, and as shown in FIG. 6, may include:
step S601, sending feedback confirmation information to the network-side device in response to receiving first MAC CE signaling for the GNSS measurement sent by the network-side device, wherein the first MAC CE signaling carries the trigger information.

Furthermore, in an embodiment of the present disclosure, the method further includes:
sending feedback confirmation information to the network-side device in response to receiving first MAC CE signaling for the GNSS measurement sent by the network-side device, wherein the first MAC CE signaling carries the trigger information.

For example, in an embodiment of the present disclosure, the terminal may send the feedback confirmation information to the network-side device after receiving the first MAC CE signaling sent by the network-side device.

Furthermore, in an embodiment of the present disclosure, sending the feedback confirmation information to the network-side device includes at least one of:
sending second MAC CE signaling to the network-side device, wherein the second MAC CE signaling carries the feedback confirmation information; or
sending a hybrid automatic repeat request acknowledgement (HARQ ACK) to the network-side device, wherein the HARQ ACK carries the feedback confirmation information.

For example, in an embodiment of the present disclosure, in response to receiving the first MAC CE signaling for the GNSS measurement sent by the network-side device, the terminal sends the second MAC CE signaling to the network-side device, wherein the second MAC CE signaling carries the feedback confirmation information.

For example, in an embodiment of the present disclosure, in response to receiving the first MAC CE signaling for the GNSS measurement sent by the network-side device, the terminal sends the hybrid automatic repeat request acknowledgement (HARQ ACK) to the network-side device, wherein the HARQ ACK carries the feedback confirmation information.

For example, in an embodiment of the present disclosure, in response to receiving the first MAC CE signaling for the GNSS measurement sent by the network-side device, the terminal sends the second MAC CE signaling to the network-side device, wherein the second MAC CE signaling carries the feedback confirmation information; or sends the hybrid automatic repeat request acknowledgement (HARQ ACK) to the network-side device, wherein the HARQ ACK carries the feedback confirmation information.

In an embodiment of the present disclosure, the description of step 601 may refer to the description of step 401, which is not limited here in the embodiment of the present disclosure. The optional examples in the embodiment of the present disclosure may be arbitrarily combined, and if there is no contradiction, the embodiment of the present disclosure may be combined with steps from other embodiments or optional examples from other embodiments.

In summary, in the embodiments of the present disclosure, in response to the first MAC CE signaling for the GNSS measurement sent by the network-side device being received, the feedback confirmation information is sent to the network-side device, wherein the first MAC CE signaling carries the trigger information. In the embodiments of the present disclosure, when receiving the first MAC CE signaling, the terminal may send the feedback confirmation information to the network-side device, thereby improving the accuracy of initiating the measurement gap and enhancing the accuracy of the GNSS measurement. The present disclosure provides a processing method for the "GNSS measurement" situation to provide a GNSS measurement mechanism. For the GNSS measurement triggered by the network-side device, the GNSS measurement may be performed with the measurement gap, which reduces a case where the GNSS measurement may not be performed due to an undefined measurement mechanism, thereby improving the convenience of the GNSS measurement.

FIG. 7 is a flowchart of a GNSS measurement method provided by an embodiment of the present disclosure. The method is executed by the terminal, and as shown in FIG. 7, and may include:
step 701, sending feedback confirmation information to the network-side device in response to receiving first MAC CE signaling for the GNSS measurement sent by the network-side device, wherein the first MAC CE signaling carries the trigger information; and
step 702, performing the GNSS measurement by initiating the measurement gap in response to determining that the feedback confirmation information is sent successfully.

For example, in an embodiment of the present disclosure, the terminal initiates the measurement gap only after the confirmation information fed back to the network is successfully sent, for example, the terminal may initiate the measurement gap to perform the GNSS measurements.

Furthermore, in an embodiment of the present disclosure, performing the GNSS measurement by initiating the measurement gap in response to determining that the feedback confirmation information is sent successfully includes:
determining that the feedback confirmation information is sent successfully in response to receiving a positive HARQ ACK feedback for MAC PDU carrying confirmation information, and performing the GNSS measurement by initiating the measurement gap.

For example, in an embodiment of the present disclosure, the method further includes:
determining a second time of receiving the positive HARQ ACK feedback for the MAC PDU carrying the confirmation information be a start time of the measurement gap.

For example, in an embodiment of the present disclosure, the start time of the measurement gap may, for example, be configured to have an offset relative to the first time of receiving the first MAC CE for the GNSS measurement sent by the network device. During the offset time, the terminal may feedback the confirmation information and determine whether the confirmation information is sent successfully to the network. If it is sent successfully, the measurement gap is initiated after the start time of the measurement gap reaches; and if it is not sent successfully within the offset time, the measurement gap is not initiated.

For example, in an embodiment of the present disclosure, the start time of the measurement gap may, for example, be a second time of receiving the positive HARQ ACK feedback for MAC PDU carrying the confirmation information.

For example, in an embodiment of the present disclosure, the start time of the measurement gap may be determined based on at least one of the configured start time offset of the measurement gap or the system-agreed start time offset of the measurement gap and based on the second time of receiving the positive HARQ ACK feedback for MAC PDU carrying the confirmation information.

In an embodiment of the present disclosure, the description of steps 701 and 702 may refer to the description of step 401, which is not limited here in the embodiment of the present disclosure. The optional examples in the embodiment of the present disclosure may be arbitrarily combined, and if there is no contradiction, the embodiment of the present disclosure may be combined with steps from other embodiments or optional examples from other embodiments.

In summary, in the embodiments of the present disclosure, the feedback confirmation information is sent to the network-side device in response to the first MAC CE signaling for the GNSS measurement sent by the network-side device being received, wherein the first MAC CE signaling carries the trigger information; and the GNSS measurement is performed by initiating the measurement gap in response to determining that the feedback confirmation information is sent successfully. In the embodiments of the present disclosure, when receiving the first MAC CE signaling, the terminal may initiate the measurement gap to perform the GNSS measurement after determining that the feedback confirmation information is sent successfully, thereby improving the accuracy of initiating the measurement gap and enhancing the accuracy of GNSS measurement. The present disclosure provides a processing method for the "GNSS measurement" situation to provide a GNSS measurement mechanism. For the GNSS measurement triggered by the network-side device, the GNSS measurement may be performed with the measurement gap, which reduces a case where the GNSS measurement may not be performed due to an undefined measurement mechanism, thereby improving the convenience of the GNSS measurement.

FIG. 8 is a flowchart of a GNSS measurement method provided by an embodiment of the present disclosure, which is executed by the terminal, and as shown in FIG. 8, may include:
step 801, triggering random access after completing the GNSS measurement.

In an embodiment of the present disclosure, the description of step 801 may refer to the description of step 401, which is not limited here in the embodiment of the present disclosure. The optional examples in the embodiment of the present disclosure may be arbitrarily combined, and if there is no contradiction, the embodiment of the present disclosure may be combined with steps from other embodiments or optional examples from other embodiments.

In summary, in the embodiments of the present disclosure, after the GNSS measurement is completed, the random access is triggered. In the embodiments of the present disclosure, when receiving the GNSS measurement triggered by the network device, the terminal may perform the GNSS measurement using the measurement gap, thereby improving the convenience of determining GNSS position fix. The embodiment of the present disclosure specifically discloses triggering the random access after completing the GNSS measurement, which increases the success probability of random access. The present disclosure provides a processing method for the "GNSS measurement" situation to provide a GNSS measurement mechanism. For the GNSS measurement triggered by the network-side device, the GNSS measurement may be performed with the measurement gap, which reduces a case where the GNSS measurement may not be performed due to an undefined measurement mechanism, thereby improving the convenience of the GNSS measurement.

FIG. 9 is a flowchart of a GNSS measurement method provided by an embodiment of the present disclosure, which is executed by the terminal, and as shown in FIG. 9, may include:
step 901, sending indication information to the network-side device in response to not obtaining a GNSS position fix during the measurement gap, wherein the indication information is configured to indicate that the terminal does not complete the GNSS measurement.

Furthermore, in an embodiment of the present disclosure, sending the indication information to the network-side device includes at least one of:
sending third MAC CE signaling to the network-side device, wherein the third MAC CE signaling carries the indication information; or
sending second RRC signaling to the network-side device, wherein the second RRC signaling carries the indication information.

For example, in an embodiment of the present disclosure, the third MAC CE signaling may be a MAC CE command carrying the indication information and sent by the terminal to the network-side device. The term "third" in the third MAC CE signaling is used solely to distinguish from other MAC CE signaling.

For example, in an embodiment of the present disclosure, the second RRC signaling may be RRC signaling carrying the indication information and sent by the terminal to the network-side device. The term "second" in the second RRC signaling is used solely to distinguish from other RRC signaling.

For example, in an embodiment of the present disclosure, the terminal sends the third MAC CE signaling to the network-side device, wherein the third MAC CE signaling carries the indication information, and the indication information is used to indicate that the terminal does not complete the GNSS measurement.

For example, in an embodiment of the present disclosure, the terminal sends the second RRC signaling to the network-side device, wherein the second RRC signaling carries the indication information, and the indication information is used to indicate that the terminal does not complete the GNSS measurement.

For example, in an embodiment of the present disclosure, the terminal sends the third MAC CE signaling to the network-side device, wherein the third MAC CE signaling carries the indication information; or sends the second RRC signaling to the network-side device, wherein the second RRC signaling carries the indication information, and the indication information is used to indicate that the terminal does not complete the GNSS measurement.

Furthermore, in an embodiment of the present disclosure, the method further includes:
triggering send receive (SR) in response to that no uplink resources are available for sending the third MAC CE signaling.

Furthermore, in an embodiment of the present disclosure, sending the third MAC CE signaling to the network-side device includes:
sending GNSS validity duration MAC CE signaling to the network-side device, wherein the GNSS validity duration MAC CE signaling carries a special value, and the special value is configured to indicate that the terminal does not complete the GNSS measurement.

For example, in an embodiment of the present disclosure, the special value does not specifically refer to a fixed value. The special value may, for example, be 0, and the special value may, for example, also be -1.

In an embodiment of the present disclosure, the description of step 901 may refer to the description of step 401, which is not limited here in the embodiment of the present disclosure. The optional examples in the embodiment of the present disclosure may be arbitrarily combined, and if there is no contradiction, the embodiment of the present disclosure may be combined with steps from other embodiments or optional examples from other embodiments.

In summary, in the embodiments of the present disclosure, the indication information is sent to the network-side device in response to the GNSS position fix being not obtained during the measurement gap, wherein the indication information is configured to indicate that the terminal does not complete the GNSS measurement. In the embodiments of the present disclosure, when receiving the GNSS measurement triggered by the network device, the terminal may perform the GNSS measurement using the measurement gap, thereby improving the convenience of determining the GNSS position fix. The embodiment of the present disclosure specifically discloses that when the GNSS position fix is not obtained during the measurement gap, the indication information is sent to the network-side device, which reduces the time for the network-side device to obtain the indication information. The present disclosure provides a processing method for the "GNSS measurement" situation to provide a GNSS measurement mechanism. For the GNSS measurement triggered by the network-side device, the GNSS measurement may be performed with the measurement gap, which reduces a case where the GNSS measurement may not be performed due to an undefined measurement mechanism, thereby improving the convenience of the GNSS measurement.

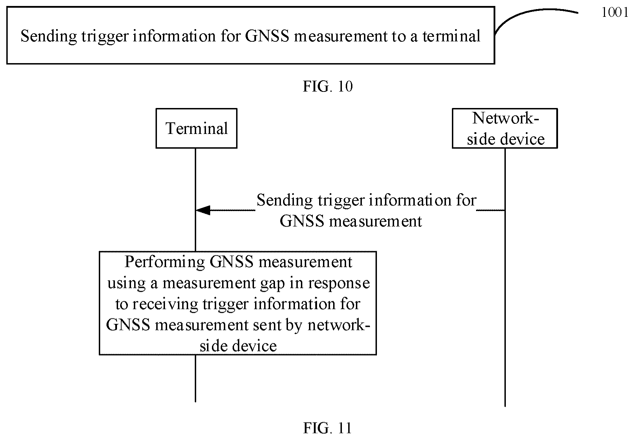

FIG. 10 is a flowchart of a GNSS measurement method provided by an embodiment of the present disclosure, which is executed by a network-side device. As shown in FIG. 10, the method may include:
step 1001, sending trigger information for GNSS measurement to a terminal.

Furthermore, in an embodiment of the present disclosure, the method further includes:
sending configuration information to the terminal, wherein the configuration information is configured to configure a measurement gap.

For example, in an embodiment of the present disclosure, the configuration information may be sent via a system message or an RRC dedicated message.

For example, in an embodiment of the present disclosure, for example, for Control Plane CIoT EPS/5GS optimisation, the network device may send the configuration information of the measurement gap to an NB-IoT terminal via at least one of connection establishment message or connection recovery message, or via a system message.

For example, in an embodiment of the present disclosure, for other IoT terminals, the network-side device may, for example, send the configuration information of the measurement gap to the terminal via a connection reconfiguration message.

Furthermore, in an embodiment of the present disclosure, sending the trigger information for the GNSS measurement to the terminal includes:
sending first medium access control-control element (MAC CE) signaling for the GNSS measurement to the terminal, wherein the first MAC CE signaling carries the trigger information.

Furthermore, in an embodiment of the present disclosure, the first MAC CE signaling also carries the configuration information.

For example, in an embodiment of the present disclosure, the network device may send the first MAC CE signaling to the terminal. The first MAC CE signaling carries the trigger information.

For example, in an embodiment of the present disclosure, the network device may further send MAC CE signaling to the terminal. The MAC CE signaling carries the configuration information.

Furthermore, in an embodiment of the present disclosure, sending the configuration information to the terminal includes:
sending first radio resource control (RRC) signaling to the terminal, wherein the first RRC signaling carries the configuration information.

For example, in an embodiment of the present disclosure, wherein the configuration information further includes at least one of:
a duration of the measurement gap;
a start time offset of the measurement gap; or
a start time of the measurement gap.

Furthermore, in an embodiment of the present disclosure, after sending the trigger information for the GNSS measurement to the terminal, the method further includes:
receiving feedback confirmation information sent by the terminal.

Furthermore, in an embodiment of the present disclosure, receiving the feedback confirmation information sent by the terminal includes at least one of:
receiving second MAC CE signaling sent by the terminal, wherein the second MAC CE signaling carries the feedback confirmation information; or
receiving a hybrid automatic repeat request acknowledgement (HARQ ACK) sent by the terminal, wherein the HARQ ACK carries the feedback confirmation information.

Furthermore, in an embodiment of the present disclosure, the method further includes:
receiving indication information sent by the terminal, wherein the indication information is configured to indicate that the terminal does not complete the GNSS measurement.

Furthermore, in an embodiment of the present disclosure, receiving the indication information sent by the terminal includes:
receiving GNSS validity duration MAC CE signaling sent by the terminal, wherein the GNSS validity duration MAC CE signaling carries a special value, and the special value is configured to indicate that the terminal does not complete the GNSS measurement.

In summary, in the embodiment of the present disclosure, the trigger information for the GNSS measurement is sent to the terminal. The present disclosure provides a processing method for the "GNSS measurement" situation to send the trigger information to the terminal, so that the terminal may perform the GNSS measurement with the measurement gap for the GNSS measurement triggered by the network-side device, which reduces a case where the GNSS measurement may not be performed due to an undefined measurement mechanism, thereby improving the convenience of the GNSS measurement.

Furthermore, in an embodiment of the present disclosure, when the terminal receives the GNSS measurement triggered by the network-side device, the terminal may perform the GNSS measurement based on the measurement gap.

For example, in an embodiment of the present disclosure, the measurement gap is a time interval during which the terminal may perform the GNSS measurement. Optionally, the terminal may only perform the GNSS measurement within the time interval, without performing other measurements or uplink/downlink transmissions.

For example, in an embodiment of the present disclosure, the measurement gap may be system-agreed or configured by the network for the terminal.

For example, in an embodiment of the present disclosure, if the measurement gap is system-agreed, the system may specify a fixed measurement gap duration. The system may also specify a time offset for starting the GNSS measurement.

For example, in an embodiment of the present disclosure, the starting position of the time offset for starting the GNSS measurement is that when the terminal receives indication information for the GNSS measurement sent by the network. Optionally, the time taken by the terminal to process the indication information may also be considered. The value of the time offset may be 0 or another value. The unit thereof may be minute, second, millisecond, subframe, slot counts, symbol counts, etc. After receiving the MAC CE for triggering the GNSS measurement sent by the network-side device, the terminal performs the GNSS measurement during the agreed duration of the measurement gap from the agreed time offset, optionally plus the processing delay of the MAC CE, until the GNSS positioning fix is measured or the time expires.

For example, in an embodiment of the present disclosure, if the measurement gap is network-configured, the network-side device may carry the configuration information of the measurement gap in the MAC CE indicating the GNSS measurement.

For example, in an embodiment of the present disclosure, the configuration information of the measurement gap may include at least one of: a duration of the measurement gap; a start time offset of the measurement gap; or a start time of the measurement gap.

For example, in an embodiment of the present disclosure, the start time offset of the measurement gap may be the time offset relative to the time when the terminal receives the MAC CE indicating the GNSS measurement by the network, or the time offset relative to the configured start time of the measurement gap. When considering the time when the terminal receives the MAC CE indicating the GNSS measurement by the network, the delay of the terminal processing the MAC CE may be taken into account. After receiving the MAC CE for triggering the GNSS measurement sent by the network, the terminal performs the GNSS measurement during the agreed duration of the measurement gap from the agreed time offset, optionally plus the processing delay of the MAC CE, until the GNSS positioning fix is measured or the time expires.

For example, in an embodiment of the present disclosure, the unit of the start time may be absolute time, which may be represented by Hyper System Frame Number (Hyper SFN), System Frame Number (SFN), or SFN+subframe number, Hyper SFN+SFN, or Hyper SFN+SFN+subframe number. The unit of the start time may also be relative time, i.e., a relative time with respect to the configuration receiving time of the measurement gap, and the unit thereof may be minute, second, millisecond, subframe, slot counts, symbol counts, etc.

For example, in an embodiment of the present disclosure, if the configuration information of the measurement gap does not indicate the time offset, a default value is used, such as 0. If the configuration information of the measurement gap does not indicate the duration of the measurement gap, a default value is used, such as 1 second.

For example, in an embodiment of the present disclosure, if the measurement gap is network-configured, the network may configure the measurement gap via RRC.

For example, in an embodiment of the present disclosure, the configuration information of the measurement gap may include at least one of: a duration of the measurement gap; a start time offset of the measurement gap; or a start time of the measurement gap.

For example, in an embodiment of the present disclosure, if the configuration information of the measurement gap does not indicate the time offset, a default value may be used, such as 0. If the configuration information of the measurement gap does not indicate the duration of the measurement gap, a default value is used, such as 1 second. If the configuration information of the measurement gap does not indicate the start time of the measurement gap, the time when the MAC CE for triggering the GNSS measurement is received from the network is used by default.

For example, in an embodiment of the present disclosure, the unit of the start time may be absolute time, which may use Hyper SFN, SFN, or SFN+subframe number, Hyper SFN+SFN, or Hyper SFN+SFN+subframe number. The unit of the start time may also be relative time, i.e., a relative time with respect to the configuration receiving time of the measurement gap, and the unit thereof may be minute, second, millisecond, subframe, slot counts, symbol counts, etc.

For example, in an embodiment of the present disclosure, the start time/activation time of the measurement gap may be the time when the terminal receives the MAC CE for triggering the GNSS measurement sent by the network, optionally plus the processing delay of the terminal processing the MAC CE, and optionally plus a start time offset.

For example, in an embodiment of the present disclosure, the processing delay of the MAC CE may adopt a system-specified value.

For example, in an embodiment of the present disclosure, the end time of the measurement gap may be the start time of the measurement gap plus the duration of the measurement gap.

For example, in an embodiment of the present disclosure, the terminal may feed back confirmation information to the network after receiving the MAC CE for triggering the GNSS measurement sent by the network.

For example, in an embodiment of the present disclosure, the confirmation information may be sent via MAC CE or HARQ ACK.

For example, in an embodiment of the present disclosure, the terminal initiates the measurement gap only after the confirmation information is sent successfully to the network.

Optionally, in an embodiment of the present disclosure, when receiving a positive HARQ ACK feedback for the MAC PDU carrying the confirmation information, the terminal may determine that the confirmation information is sent successfully.

For example, in an embodiment of the present disclosure, the start time of the measurement gap may be configured to have an offset relative to the time of receiving the MAC CE for triggering the GNSS measurement sent by the network. During the offset time, the terminal may feedback the confirmation information and determine whether the confirmation information is sent successfully to the network. If it is sent successfully, the measurement gap is initiated after the start time of the measurement gap reaches; and if it is not sent successfully within the offset time, the measurement gap is not initiated.

For example, in an embodiment of the present disclosure, the start time of the measurement gap is the time when the terminal receives the positive HARQ ACK feedback for the MAC PDU carrying the confirmation information, optionally plus the configured or agreed start time offset described above.

Optionally, in an embodiment of the present disclosure, after completing the GNSS measurement, the terminal triggers random access.

For example, in an embodiment of the present disclosure, if the terminal fails to obtain a GNSS position fix during the measurement gap, the terminal sends indication information to the network.

For example, in an embodiment of the present disclosure, the indication message may be an RRC message or MAC CE.

Optionally, in an embodiment of the present disclosure, if the terminal does not have an available uplink resource to send the MAC CE, the terminal triggers SR.

For example, in an embodiment of the present disclosure, if the MAC CE is used, the MAC CE may adopt GNSS validity duration MAC CE, and a special value may be reported to indicate that the terminal fails to complete the GNSS measurement, for example, indicating 0, -1, etc.

FIG. 11 is an interaction diagram of a GNSS measurement method provided by an embodiment of the present disclosure. As shown in FIG. 11, the GNSS measurement method may include:
a network-side device sends trigger information for GNSS measurement to a terminal; and
the terminal performs the GNSS measurement using a measurement gap in response to receiving the trigger information for the GNSS measurement sent by the network-side device.

In an embodiment of the present disclosure, the description regarding the above system may refer to the description of steps 401 and 1001, which is not limited here in the embodiment of the present disclosure. The optional examples in the embodiment of the present disclosure may be arbitrarily combined, and if there is no contradiction, the embodiment of the present disclosure may be combined with steps from other embodiments or optional examples from other embodiments.

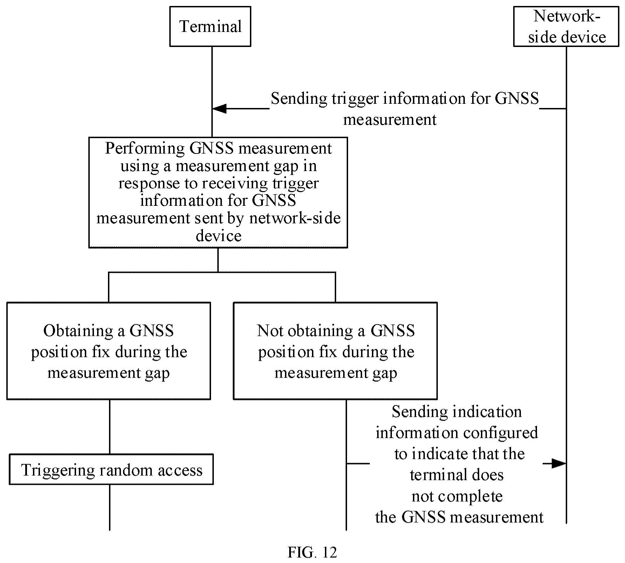

FIG. 12 is an interaction diagram of a GNSS measurement method provided by an embodiment of the present disclosure. As shown in FIG. 12, the method may include:
a network-side device sends trigger information for a GNSS measurement to a terminal;
the terminal performs the GNSS measurement using a measurement gap in response to receiving the trigger information for the GNSS measurement sent by the network-side device;
the terminal further obtains a GNSS position fix during the measurement gap, and triggers random access after completing the GNSS measurement; and
the terminal further sends indication information to the network-side device in response to not obtaining a GNSS position fix during the measurement gap, wherein the indication information is configured to indicate that the terminal does not complete the GNSS measurement.

In an embodiment of the present disclosure, the description regarding the above GNSS measurement method may refer to the description of steps 401 and 1001, which is not limited here in the embodiment of the present disclosure. The optional examples in the embodiment of the present disclosure may be arbitrarily combined, and if there is no contradiction, the embodiment of the present disclosure may be combined with steps from other embodiments or optional examples from other embodiments.

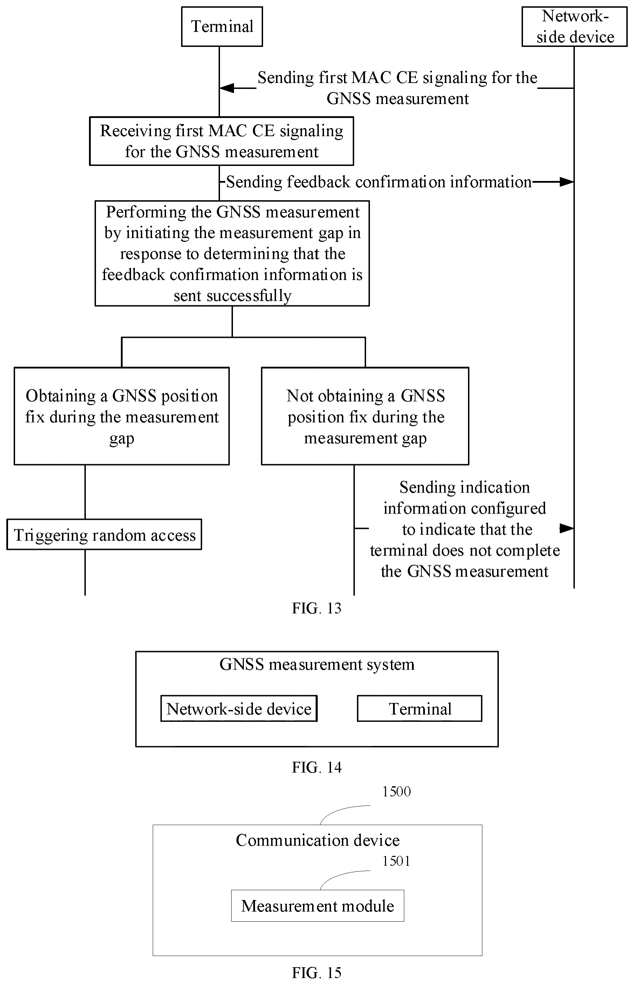

FIG. 13 is an interaction diagram of a GNSS measurement method provided by an embodiment of the present disclosure. As shown in FIG. 13, the method may include:
a network-side device sends first MAC CE signaling for GNSS measurement to a terminal, wherein the first MAC CE signaling carries the trigger information;
the terminal sends feedback confirmation information to the network-side device in response to receiving the first MAC CE signaling for the GNSS measurement sent by the network-side device;
the terminal further determines that the feedback confirmation information is successfully sent and initiates a measurement gap to perform the GNSS measurement;
the terminal further obtains a GNSS position fix during the measurement gap, and triggers random access after completing the GNSS measurement; and
the terminal further sends indication information to the network-side device in response to not obtaining a GNSS position fix during the measurement gap, wherein the indication information is configured to indicate that the terminal does not complete the GNSS measurement.

In an embodiment of the present disclosure, the trigger information is configured to trigger the GNSS measurement.

In an embodiment of the present disclosure, the description regarding the above system may refer to the description of steps 401 and 1001, which is not limited here in the embodiment of the present disclosure. The optional examples in the embodiment of the present disclosure may be arbitrarily combined, and if there is no contradiction, the embodiment of the present disclosure may be combined with steps from other embodiments or optional examples from other embodiments.

FIG. 14 is a structural diagram of a GNSS measurement system provided by an embodiment of the present disclosure. As shown in FIG. 13, the GNSS measurement system may include:
a network-side device for sending trigger information for GNSS measurement to a terminal; and
the terminal for performing GNSS measurement using a measurement gap in response to receiving the trigger information for the GNSS measurement sent by the network-side device.

In an embodiment of the present disclosure, the description regarding the above system may refer to the description of steps 401 and 1001, which is not limited here in the embodiment of the present disclosure. The optional examples in the embodiment of the present disclosure may be arbitrarily combined, and if there is no contradiction, the embodiment of the present disclosure may be combined with steps from other embodiments or optional examples from other embodiments.

FIG. 15 is a structural diagram of a communication device provided by an embodiment of the present disclosure. As shown in FIG. 15, the device 1500 may include:
a measurement module 1501, configured to perform GNSS measurement using a measurement gap in response to receiving trigger information for the GNSS measurement sent by a network-side device.

In summary, in a GNSS measurement device of the embodiment of the present disclosure, a measurement module performs GNSS measurement using a measurement gap in response to receiving trigger information for the GNSS measurement sent by a network-side device. In the embodiment of the present disclosure, when receiving the GNSS measurement triggered by the network-side device, a terminal may perform the GNSS measurement using the measurement gap, which may improve the convenience of determining GNSS position fix. The present disclosure provides a processing device for the "GNSS measurement" situation to provide a GNSS measurement mechanism. For the GNSS measurement triggered by the network-side device, the GNSS measurement may be performed with the measurement gap, which reduces a case where the GNSS measurement may not be performed due to an undefined measurement mechanism, thereby improving the convenience of the GNSS measurement.

Optionally, in an embodiment of the present disclosure, the measurement module 1501 is further configured for at least one of:
determining the measurement gap based on a system agreement; or
determining the measurement gap based on configuration information sent by the network-side device.

Optionally, in an embodiment of the present disclosure, the measurement module 1501 is further configured for at least one of:
determining a duration of the measurement gap based on the system agreement; or
determining a start time offset of the measurement gap based on the system agreement.

Optionally, in an embodiment of the present disclosure, the measurement module 1501 is further configured for:
determining a start position corresponding to the start time offset of the measurement gap in response to receiving the trigger information for the GNSS measurement sent by the network-side device.

Optionally, in an embodiment of the present disclosure, when performing the GNSS measurement using the measurement gap in response to receiving the trigger information for the GNSS measurement sent by the network-side device, the measurement module 1501 is specifically configured for:
performing the GNSS measurement using the measurement gap in response to receiving first medium access control-control element (MAC CE) signaling for the GNSS measurement sent by the network-side device, wherein the first MAC CE signaling carries the trigger information.

Optionally, in an embodiment of the present disclosure, the first MAC CE signaling also carries the configuration information.

Optionally, in an embodiment of the present disclosure, when determining the measurement gap based on the configuration information sent by the network-side device, the measurement module 1501 is specifically configured for:
determining the measurement gap based on first radio resource control (RRC) signaling sent by the network-side device, wherein the first RRC signaling carries the configuration information.

Optionally, in an embodiment of the present disclosure, the configuration information further includes at least one of:
a duration of the measurement gap;
a start time offset of the measurement gap; or
a start time of the measurement gap.

Optionally, in an embodiment of the present disclosure, the start time offset of the measurement gap includes at least one of:
a time offset relative to a time when the terminal receives the first MAC CE signaling; or
a time offset relative to a configured start time of the measurement gap.

Optionally, in an embodiment of the present disclosure, the measurement module 1501 is further configured for at least one of:
determining the start time offset of the measurement gap be a first default value in response to the configuration information not indicating the start time offset of the measurement gap;
determining the duration of the measurement gap be a second default value in response to the configuration information not indicating the duration of the measurement gap; or
determining the start time of the measurement gap based on the start time of the measurement gap being a first time of receiving the first MAC CE signaling for the GNSS measurement sent by the network-side device in response to the configuration information not indicating the start time of the measurement gap.

Optionally, in an embodiment of the present disclosure, the measurement module 1501 is further configured for:
determining a first time of receiving the first MAC CE signaling for the GNSS measurement sent by the network-side device be a start time of the measurement gap.

Optionally, in an embodiment of the present disclosure, when determining the first time of receiving the first MAC CE signaling for triggering the GNSS measurement sent by the network-side device be the start time of the measurement gap, the measurement module 1501 is specifically configured for:
determining the start time of the measurement gap based on at least one of a processing delay of the first MAC CE signaling or the start time offset of the measurement gap and based on the first time of receiving the first MAC CE signaling for the GNSS measurement sent by the network-side device.

Optionally, in an embodiment of the present disclosure, a processing delay of the first MAC CE signaling is a system-defined value.

Optionally, in an embodiment of the present disclosure, the measurement module 1501 is further configured for:
sending feedback confirmation information to the network-side device in response to receiving first MAC CE signaling for the GNSS measurement sent by the network-side device, wherein the first MAC CE signaling carries the trigger information.

Optionally, in an embodiment of the present disclosure, when sending the feedback confirmation information to the network-side device, the measurement module 1501 is specifically configured for at least one of:
sending second MAC CE signaling to the network-side device, wherein the second MAC CE signaling carries the feedback confirmation information; or
sending a hybrid automatic repeat request acknowledgement (HARQ ACK) to the network-side device, wherein the HARQ ACK carries the feedback confirmation information.

Optionally, in an embodiment of the present disclosure, when performing the GNSS measurement using the measurement gap in response to receiving the trigger information for the GNSS measurement sent by the network-side device, the measurement module 1501 is specifically configured for:
sending feedback confirmation information to the network-side device in response to receiving first MAC CE signaling for the GNSS measurement sent by the network-side device, wherein the first MAC CE signaling carries the trigger information; and
performing the GNSS measurement by initiating the measurement gap in response to determining that the feedback confirmation information is sent successfully.

Optionally, in an embodiment of the present disclosure, when performing the GNSS measurement by initiating the measurement gap in response to determining that the feedback confirmation information is sent successfully, the measurement module 1501 is further configured for:
determining that the feedback confirmation information is sent successfully in response to receiving a positive HARQ ACK feedback for a medium access control protocol data unit (MAC PDU) carrying confirmation information, and performing the GNSS measurement by initiating the measurement gap.

Optionally, in an embodiment of the present disclosure, the measurement module 1501 is further configured for:
determining a second time of receiving the positive HARQ ACK feedback for the MAC PDU carrying the confirmation information be a start time of the measurement gap.

Optionally, in an embodiment of the present disclosure, the measurement module 1501 is further configured for:
triggering random access after completing the GNSS measurement.

Optionally, in an embodiment of the present disclosure, the measurement module 1501 is further configured for:
sending indication information to the network-side device in response to not obtaining a GNSS position fix during the measurement gap, wherein the indication information is configured to indicate that the terminal does not complete the GNSS measurement.

Optionally, in an embodiment of the present disclosure, when sending the indication information to the network-side device, the measurement module 1501 is specifically configured for at least one of:
sending third MAC CE signaling to the network-side device, wherein the third MAC CE signaling carries the indication information; or
sending second RRC signaling to the network-side device, wherein the second RRC signaling carries the indication information.

Optionally, in an embodiment of the present disclosure, the measurement module 1501 is further configured for:
triggering send receive (SR) in response to that no uplink resources are available for sending the third MAC CE signaling.

Optionally, in an embodiment of the present disclosure, when sending the third MAC CE signaling to the network-side device, the measurement module 1501 is specifically configured for:
sending GNSS validity duration MAC CE signaling to the network-side device, wherein the GNSS validity duration MAC CE signaling carries a special value, and the special value is configured to indicate that the terminal does not complete the GNSS measurement.

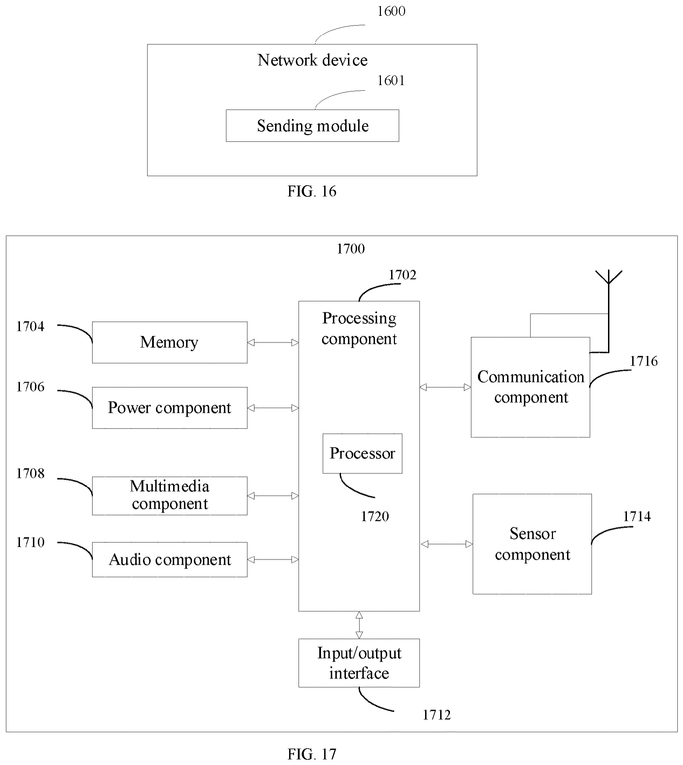

FIG. 16 is a structural diagram of a network device provided by the present disclosure. As shown in FIG. 16, the device 1600 may include:
a sending module 1601, configured to send trigger information for global navigation satellite system (GNSS) measurement to a terminal.

In summary, in a GNSS measurement device of the embodiment of the present disclosure, a sending module sends trigger information for global navigation satellite system (GNSS) measurement to a terminal. The present disclosure provides a processing device for the "GNSS measurement" situation to send the trigger information to the terminal, so that the terminal may perform the GNSS measurement with the measurement gap for the GNSS measurement triggered by the network-side device, which reduces a case where the GNSS measurement may not be performed due to an undefined measurement mechanism, thereby improving the convenience of the GNSS measurement.

Optionally, in an embodiment of the present disclosure, the sending module 1601 is further configured for:
sending configuration information to the terminal, wherein the configuration information is configured to configure a measurement gap.

Optionally, in an embodiment of the present disclosure, when sending the trigger information for the GNSS measurement to the terminal, the sending module 1601 is specifically configured for:
sending first medium access control-control element (MAC CE) signaling for the GNSS measurement to the terminal, wherein the first MAC CE signaling carries the trigger information.

Optionally, in an embodiment of the present disclosure, the first MAC CE signaling also carries the configuration information.

Optionally, in an embodiment of the present disclosure, when sending the configuration information to the terminal, the sending module 1601 is specifically configured for:
sending first radio resource control (RRC) signaling to the terminal, wherein the first RRC signaling carries the configuration information.

Optionally, in an embodiment of the present disclosure, the configuration information further includes at least one of:
a duration of the measurement gap;
a start time offset of the measurement gap; or
a start time of the measurement gap.

Optionally, in an embodiment of the present disclosure, after sending the trigger information for the GNSS measurement to the terminal, the sending module 1601 is further configured for:
receiving feedback confirmation information sent by the terminal.

Optionally, in an embodiment of the present disclosure, when receiving the feedback confirmation information sent by the terminal, the sending module 1601 is specifically configured for at least one of:
receiving second MAC CE signaling sent by the terminal, wherein the second MAC CE signaling carries the feedback confirmation information; or
receiving a hybrid automatic repeat request acknowledgement (HARQ ACK) sent by the terminal, wherein the HARQ ACK carries the feedback confirmation information.

Optionally, in an embodiment of the present disclosure, the sending module 1601 is further configured for:
receiving indication information sent by the terminal, wherein the indication information is configured to indicate that the terminal does not complete the GNSS measurement.

Optionally, in an embodiment of the present disclosure, when receiving the indication information sent by the terminal, the sending module 1601 is specifically configured for:
receiving GNSS validity duration MAC CE signaling sent by the terminal, wherein the GNSS validity duration MAC CE signaling carries a special value, and the special value is configured to indicate that the terminal does not complete the GNSS measurement.

FIG. 17 is a block diagram of a terminal 1700 provided by an embodiment of the present disclosure. For example, the terminal 1700 may be a user equipment (UE) 1700. For example, the UE 1700 may be a mobile phone, a computer, a digital broadcast terminal, a message transceiver device, a game console, a tablet device, a medical device, a fitness device, a personal digital assistant, and the like.

Referring to FIG. 17, the UE 1700 may include at least one of a processing component 1702, a memory 1704, a power component 1706, a multimedia component 1708, an audio component 1710, an input/output (I/O) interface 1712, a sensor component 1714, and a communication component 1716.

The processing component 1702 generally controls the overall operations of the UE 1700, such as operations associated with display, telephone calls, data communications, camera operations, and recording operations. The processing component 1702 may include at least one processor 1720 to execute instructions to complete all or part of the steps of the foregoing method. In addition, the processing component 1702 may include at least one module to facilitate interaction between the processing component 1702 and other components. For example, the processing component 1702 may include a multimedia module to facilitate the interaction between the multimedia component 1708 and the processing component 1702.

The memory 1704 is configured to store various types of data to support the operation at the UE 1700. Examples of these data include instructions for any application or method operating on the UE 1700, contact data, phone book data, messages, pictures, videos and the like. The memory 1704 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 1706 provides power to various components of the UE 1700. The power component 1706 may include a power management system, at least one power supply, and other components associated with generating, managing, and distributing power for the UE 1700.

The multimedia component 1708 includes a screen that provides an output interface between the UE 1700 and the user. In some embodiments, the screen may include a liquid crystal display (LCD) and a touch panel (TP). If the screen includes a touch panel, the screen may be implemented as a touch screen to receive input signals from the user. The touch panel includes at least one touch sensor to sense touch, sliding, and gestures on the touch panel. The touch sensor may not only sense the boundary of the touch or slide action, but also detect the awakening time and pressure related to the touch or slide operation. In some embodiments, the multimedia component 1708 includes a front camera and/or a rear camera. When the UE 1700 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 1710 is configured to output and/or be input audio signals. For example, the audio component 1710 includes a microphone (MIC), and when the UE 1700 is in an operation mode, such as a call mode, a recording mode, and a voice recognition mode, the microphone is configured to receive an external audio signal. The received audio signal can be further stored in the memory 1704 or sent via the communication component 1716. In some embodiments, the audio component 1710 further includes a speaker for outputting audio signals.

The I/O interface 1712 provides an interface between the processing component 1702 and a peripheral interface module. The above-mentioned peripheral interface module may be a keyboard, a click wheel, a button, and the like. These buttons may include but are not limited to home button, volume button, start button, and lock button.

The sensor component 1714 includes at least one sensor for providing the UE 1700 with various aspects of state evaluation. For example, the sensor component 1714 can detect the on/off status of the UE 1700 and the relative positioning of components. For example, the component is a display and keypad of the UE 1700. The sensor component 1714 can also detect the position change of the UE 1700 or a component of the UE 1700, the presence or absence of contact between the user and the UE 1700, the orientation or acceleration/deceleration of the UE 1700, and the temperature change of the UE 1700. The sensor component 1714 may include a proximity sensor configured to detect the presence of nearby objects when there is no physical contact. The sensor component 1714 may also include a light sensor, such as a CMOS or CCD image sensor, for use in imaging applications. In some embodiments, the sensor component 1714 may also include an acceleration sensor, a gyroscope sensor, a magnetic sensor, a pressure sensor, or a temperature sensor.

The communication component 1716 is configured to facilitate wired or wireless communication between the UE 1700 and other devices. The UE 1700 can access a wireless network based on a communication standard, such as WiFi, 2G, or 3G, or a combination thereof. In an exemplary embodiment, the communication component 1716 receives a broadcast signal or broadcast related information from an external broadcast management system via a broadcast channel. In an exemplary embodiment, the communication component 1716 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the UE 1700 may be implemented by at least one of application specific integrated circuit (ASIC), digital signal processor (DSP), digital signal processing device (DSPD), programmable logic devices (PLD), field programmable gate array (FPGA), controller, microcontroller, microprocessor, or other electronic components, to perform the above-mentioned methods.

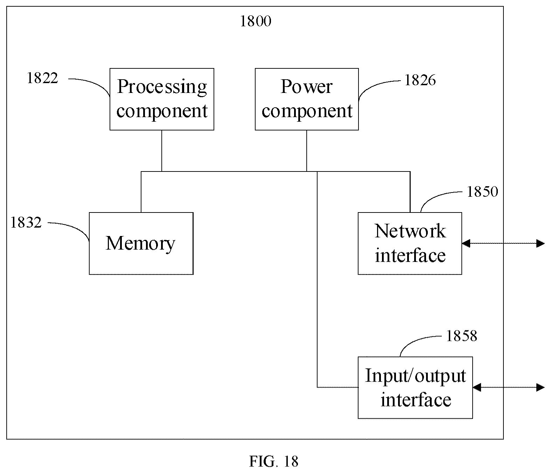

FIG. 18 is a block diagram of a network-side device 1800 provided by an embodiment of the present disclosure. For example, the network-side device 1800 may be provided as a network side device. Referring to FIG. 18, the network-side device 1800 includes a processing component 1811, which further includes at least one processor, and a memory resource represented by a memory 1832 for storing instructions, such an application program, that may be executed by the processing component 1822. The application program stored in memory 1832 may include one or more modules each corresponding to a set of instructions. In addition, the processing component 1810 is configured to execute instructions to perform any of the methods described above and applied to the network-side device, for example, the method shown in FIG. 10.

The network-side device 1800 may also include a power component 1826 configured to perform power management of the network-side device 1800, a wired or wireless network interface 1850 configured to connect the network-side device 1800 to a network, and an input/output (I/O) interface 1858. The network-side device 1800 may operate based on an operating system stored in the memory 1832, for example, Windows Server TM, Mac OS XTM, Unix TM, Linux TM, Free BSDTM or the like.

In the above embodiments of the present disclosure, the methods provided by the embodiments of the present disclosure are described from the perspectives of the network -side device and the UE, respectively. In order to implement each of the functions in the method provided by the above embodiments of the present disclosure, the network-side device and the UE may include a hardware structure and a software module to implement each of the above functions in the form of the hardware structure, the software module, or the hardware structure plus the software module. One of the above functions may be performed in the form of the hardware structure, the software module, or the hardware structure plus the software module.

An embodiment of the present disclosure provides a communication device. The communication device may include a transceiver module and a processing module. The transceiver module may include a sending module and/or a receiving module, the sending module is configured for implementing a sending function, and the receiving module is configured for implementing a receiving function, and the transceiver module may implement the sending function and/or the receiving function.

The communication device may be a terminal (such as the terminal in the above method embodiment), a device in a terminal, or a device that can be used in conjunction with a terminal. Alternatively, the communication device may be a network device, a device in a network device, or a device that can be used in conjunction with a network device.

An embodiment of the present disclosure provides another communication device. The communication device may be a network device or a terminal (such as the terminal in the above method embodiment), or may be a chip, a chip system, or a processor, etc. that supports the network device to implement the above method, or may be a chip, a chip system, or a processor, etc. that supports the terminal to implement the above method. The device may be used to implement the method described in the above method embodiment, details of which may refer to the description of the above method embodiment.

The communication device may include one or more processors. The processor may be a general-purpose processor or a dedicated processor, etc. For example, it may be a baseband processor or a central processing unit. The baseband processor may be used for processing the communication protocol and the communication data, and the central processing unit may be used for controlling the communication device (e.g., a network-side device, a baseband chip, a terminal, a terminal chip, DU or CU, etc.), executing a computer program, and processing the data of the computer program.

Optionally, the communication device may further include one or more memories on which a computer program may be stored, and the processor may execute the computer program to cause the communication device to perform the method described in the above method embodiment. Optionally, data may also be stored in the memory. The communication device and the memory may be provided separately or may be integrated together.

Optionally, the communication device may further include a transceiver and an antenna. The transceiver may be referred to as a transceiver unit, a transceiver machine, a transceiver circuit or the like, to implement a transceiver function. The transceiver may include a receiver and a sender, the receiver may be referred to as a receiving machine, a receiving circuit, or the like to implement a receiving function, and the sender may be referred to as a sending machine, a sending circuit or the like to implement a sending function.

Optionally, the communication device may further include one or more interface circuits. The interface circuit is used to receive code instructions and transmit the same to a processor. The processor runs the code instructions to cause the communication device to perform the method described in the above method embodiment.

The communication device is a terminal (such as the terminal in the above method embodiment), and the processor is used to perform the method shown in any of FIGS. 4 to 9.

The communication device is a network-side device, and the processor is used to perform the method shown in FIG. 10.

In an implementation, the processor may include a transceiver for implementing receiving and sending functions. The transceiver may for example be a transceiver circuit, or an interface, or an interface circuit. The transceiver circuit, interface, or interface circuit for implementing the receiving and sending functions may be separate or may be integrated together. The transceiver circuit, interface, or interface circuit described above may be used for code/data reading and writing, or the transceiver circuit, interface, or interface circuit described above may be used for signal transmission or delivery.

In an implementation, the processor may store a computer program, and the computer program may run on the processor to cause the communication device to perform the method described in the above method embodiment. The computer program may be solidified in the processor, in which case the processor may be implemented by hardware.

In an implementation, the communication device may include a circuit, and the circuit may implement the sending or receiving or communicating function in the above method embodiment. The processor and transceiver described in the present disclosure may be implemented in an integrated circuit (IC), analog IC, radio frequency integrated circuit RFIC, mixed signal IC, application specific integrated circuit (ASIC), printed circuit board (PCB), electronic device or the like. The processor and transceiver may be manufactured using various IC process technologies, such as complementary metal oxide semiconductor (CMOS), N-type metal oxide semiconductor (NMOS), P-type metal oxide semiconductor (PMOS), bipolar junction transistor (BJT), bipolar CMOS (BiCMOS), silicon-germanium (SiGe), gallium arsenide (GaAs) and so on.

The communication device described in the above embodiments may be a network device or a terminal (such as the terminal in the above method embodiments). However, the scope of the communication device described in the present disclosure is not limited thereto, and the structure of the communication device may be not limited. The communication device may be a stand-alone device or may be part of a large device. For example, the communication device may be:
(1) a stand-alone integrated circuit IC, or chip, or chip system or subsystem;
(2) a collection of one or more ICs, optionally, the IC collection may also include a storage component for storing data and computer program;
(3) an ASIC, such as a modem;
(4) a module that can be embedded in other devices;
(5) a receiver, terminal, smart terminal, cellular phone, wireless device, handheld device, mobile unit, in-vehicle device, network device, cloud device, artificial intelligence device, and the like;
(6) others.

For the case where the communication device may be a chip or a chip system, the chip includes a processor and an interface. The number of processors may be one or more and the number of interfaces may be more than one.

Optionally, the chip also includes a memory for storing necessary computer programs and data.

A person skilled in the art may also appreciate that the various illustrative logical blocks and steps listed in the embodiments of the present disclosure may be implemented by electronic hardware, computer software, or a combination thereof. Whether such function is implemented by hardware or software depends on the particular application and the design requirement of the entire system. A person skilled in the art may, for each particular application, use various methods to implement the described function, but such implementation should not be construed as being outside the protection scope of the embodiments of the present disclosure.

The present disclosure also provides a readable storage medium having stored thereon instructions which, when executed by a computer, implement the function in any of the above method embodiments.

The present disclosure also provides a computer program product which, when executed by a computer, implement the function in any of the above method embodiments.

In the above embodiments, it may be achieved in whole or in part by software, hardware, firmware, or any combination thereof. When being implemented using software, it may be implemented in whole or in part in the form of a computer program product. The computer program product includes one or more computer programs. When the computer programs are loaded and executed on a computer, all or part of the processes or functions according to the embodiments of the present disclosure may be generated. The computer may be a general-purpose computer, a special-purpose computer, a computer network, or other programmable device. The computer program may be stored in a computer-readable storage medium or transmitted from one computer-readable storage medium to another computer-readable storage medium, e.g., the computer program may be transmitted from one web site, computer, server, or data center to another web site, computer, server or data center via a wired manner (e.g., coaxial cable, optical fiber, digital subscriber line (DSL)) or wireless manner (e.g., infrared, wireless, microwave, etc.). The computer-readable storage medium may be any usable medium to which a computer can access, or a data storage device such as a server, data center containing one or more usable media integrated. The usable medium may be a magnetic medium (e.g., a floppy disk, hard disk, tape), an optical medium (e.g., a high-density digital video disc (DVD)), or a semiconductor medium (e.g., a solid state disk (SSD)), and the like.

A person skilled in the art may understand that the terms such as first, second or the like involved in the description of the present disclosure are only for distinguishing purpose for easy description, and are not intended to limit the scope of the embodiments of the present disclosure and denote an order.

The term "at least one" in the present disclosure may also be described as one or more, and the term "a plurality of ..." may be two, three, four, or more, which is not limited in the present disclosure. In the embodiments of the present disclosure, for a kind of technical features, the "first", "second", "third", "A", "B", "C", "D", or the like may be used to differentiate the technical features in such kind of technical features, and there is no precedence or magnitude order among these technical features described by the "first", "second", "third", "A", "B", "C", "D", or the like.

Other embodiments of the present invention may be easily conceived of by a person skilled in the art upon consideration of the specification and practice of the invention disclosed herein. The present disclosure is intended to cover any variations, uses, or adaptations of the present invention that follow the general principle of the present invention and include the common knowledge and the customary technical means in the art not disclosed in the present disclosure. The specification and embodiments are to be regarded as exemplary only, and the true scope and spirit of the present disclosure are indicated by the appending claims.

It is to be understood that the present disclosure is not limited to the precise structure which has been described above and illustrated in the accompanying drawings, and that various modifications and alterations may be made without departing from the scope thereof. The scope of the present disclosure is limited only by the appending claims.

## Claims

1. A global navigation satellite system, GNSS, measurement method, performed by a terminal, comprising:
performing GNSS measurement using a measurement gap in response to receiving trigger information for the GNSS measurement sent by a network-side device.

2. The method according to claim 1, further comprising at least one of:
determining the measurement gap based on a system agreement; or
determining the measurement gap based on configuration information sent by the network-side device.

3. The method according to claim 2, further comprising at least one of:
determining a duration of the measurement gap based on the system agreement; or
determining a start time offset of the measurement gap based on the system agreement.

4. The method according to claim 3, further comprising:
determining a start position corresponding to the start time offset of the measurement gap in response to receiving the trigger information for the GNSS measurement sent by the network-side device.

5. The method according to claim 2, wherein performing the GNSS measurement using the measurement gap in response to receiving the trigger information for the GNSS measurement sent by the network-side device comprises:
performing the GNSS measurement using the measurement gap in response to receiving first medium access control-control element, MAC CE, signaling for the GNSS measurement sent by the network-side device, wherein the first MAC CE signaling carries the trigger information.

6. The method according to claim 5, wherein the first MAC CE signaling also carries the configuration information.

7. The method according to claim 2 or 5, wherein determining the measurement gap based on the configuration information sent by the network-side device comprises:
determining the measurement gap based on first radio resource control, RRC, signaling sent by the network-side device, wherein the first RRC signaling carries the configuration information.

8. The method according to claim 6 or 7, wherein the configuration information further comprises at least one of:
a duration of the measurement gap;
a start time offset of the measurement gap; or
a start time of the measurement gap.

9. The method according to claim 8, wherein the start time offset of the measurement gap comprises at least one of:
a time offset relative to a time when the terminal receives the first MAC CE signaling; or
a time offset relative to a configured start time of the measurement gap.

10. The method according to claim 8, further comprising at least one of:
determining the start time offset of the measurement gap be a first default value in response to the configuration information not indicating the start time offset of the measurement gap;
determining the duration of the measurement gap be a second default value in response to the configuration information not indicating the duration of the measurement gap; or
determining the start time of the measurement gap based on the start time of the measurement gap being a first time of receiving the first MAC CE signaling for the GNSS measurement sent by the network-side device in response to the configuration information not indicating the start time of the measurement gap.

11. The method according to any one of claims 5 to 10, further comprising:
determining a first time of receiving the first MAC CE signaling for the GNSS measurement sent by the network-side device be a start time of the measurement gap.

12. The method according to claim 11, wherein determining the first time of receiving the first MAC CE signaling for triggering the GNSS measurement sent by the network-side device be the start time of the measurement gap comprises:
determining the start time of the measurement gap based on at least one of a processing delay of the first MAC CE signaling or the start time offset of the measurement gap and based on the first time of receiving the first MAC CE signaling for the GNSS measurement sent by the network-side device.

13. The method according to claim 11, wherein a processing delay of the first MAC CE signaling is a system-defined value.

14. The method according to claim 1 or 5, further comprising:
sending feedback confirmation information to the network-side device in response to receiving first MAC CE signaling for the GNSS measurement sent by the network-side device, wherein the first MAC CE signaling carries the trigger information.

15. The method according to claim 14, wherein sending the feedback confirmation information to the network-side device comprises at least one of:
sending second MAC CE signaling to the network-side device, wherein the second MAC CE signaling carries the feedback confirmation information; or
sending a hybrid automatic repeat request acknowledgement, HARQ ACK, to the network-side device, wherein the HARQ ACK carries the feedback confirmation information.

16. The method according to claim 1 or 5, wherein performing the GNSS measurement using the measurement gap in response to receiving the trigger information for the GNSS measurement sent by the network-side device comprises:
sending feedback confirmation information to the network-side device in response to receiving first MAC CE signaling for the GNSS measurement sent by the network-side device, wherein the first MAC CE signaling carries the trigger information; and
performing the GNSS measurement by initiating the measurement gap in response to determining that the feedback confirmation information is sent successfully.

17. The method according to claim 16, wherein performing the GNSS measurement by initiating the measurement gap in response to determining that the feedback confirmation information is sent successfully comprises:
determining that the feedback confirmation information is sent successfully in response to receiving a positive HARQ ACK feedback for a medium access control protocol data unit, MAC PDU, carrying confirmation information, and performing the GNSS measurement by initiating the measurement gap.

18. The method according to claim 17, further comprising:
determining a second time of receiving the positive HARQ ACK feedback for the MAC PDU carrying the confirmation information be a start time of the measurement gap.

19. The method according to claim 1, further comprising:
triggering random access after completing the GNSS measurement.

20. The method according to claim 1 or 19, further comprising:
sending indication information to the network-side device in response to not obtaining a GNSS position fix during the measurement gap, wherein the indication information is configured to indicate that the terminal does not complete the GNSS measurement.

21. The method according to claim 20, wherein sending the indication information to the network-side device comprises at least one of:
sending third MAC CE signaling to the network-side device, wherein the third MAC CE signaling carries the indication information; or
sending second RRC signaling to the network-side device, wherein the second RRC signaling carries the indication information.

22. The method according to claim 21, further comprising:
triggering send receive, SR, in response to that no uplink resources are available for sending the third MAC CE signaling.

23. The method according to claim 21, wherein sending the third MAC CE signaling to the network-side device comprises:
sending GNSS validity duration MAC CE signaling to the network-side device, wherein the GNSS validity duration MAC CE signaling carries a special value, and the special value is configured to indicate that the terminal does not complete the GNSS measurement.

24. A global navigation satellite system, GNSS, measurement method performed by a network-side device, comprising:
sending trigger information for GNSS measurement to a terminal.

25. The method according to claim 24, further comprising:
sending configuration information to the terminal, wherein the configuration information is configured to configure a measurement gap.

26. The method according to claim 23 or 24, wherein sending the trigger information for the GNSS measurement to the terminal comprises:
sending first medium access control-control element, MAC CE, signaling for the GNSS measurement to the terminal, wherein the first MAC CE signaling carries the trigger information.

27. The method according to claim 26, wherein the first MAC CE signaling also carries the configuration information.

28. The method according to claim 25, wherein sending the configuration information to the terminal comprises:
sending first radio resource control, RRC, signaling to the terminal, wherein the first RRC signaling carries the configuration information.

29. The method according to claim 25, 27 or 28, wherein the configuration information further comprises at least one of:
a duration of the measurement gap;
a start time offset of the measurement gap; or
a start time of the measurement gap.

30. The method according to claim 24, further comprising, after sending the trigger information for the GNSS measurement to the terminal:
receiving feedback confirmation information sent by the terminal.

31. The method according to claim 30, wherein receiving the feedback confirmation information sent by the terminal comprises at least one of:
receiving second MAC CE signaling sent by the terminal, wherein the second MAC CE signaling carries the feedback confirmation information; or
receiving a hybrid automatic repeat request acknowledgement, HARQ ACK, sent by the terminal, wherein the HARQ ACK carries the feedback confirmation information.

32. The method according to claim 24, further comprising:
receiving indication information sent by the terminal, wherein the indication information is configured to indicate that the terminal does not complete the GNSS measurement.

33. The method according to claim 32, wherein receiving the indication information sent by the terminal comprises:
receiving GNSS validity duration MAC CE signaling sent by the terminal, wherein the GNSS validity duration MAC CE signaling carries a special value, and the special value is configured to indicate that the terminal does not complete the GNSS measurement.

34. A communication device, comprising:
a measurement module, configured to perform global navigation satellite system, GNSS, measurement using a measurement gap in response to receiving trigger information for the GNSS measurement sent by a network-side device.

35. A network device, comprising:
a sending module, configured to send trigger information for global navigation satellite system, GNSS, measurement to a terminal.

36. A terminal comprising a processor and a memory, wherein the memory stores a computer program that, when being executed by the processor, causes the terminal to perform the method according to any one of claims 1 to 23.

37. A network-side device comprising a processor and a memory, wherein the memory stores a computer program that, when being executed by the processor, causes the network-side device to perform the method according to any one of claims 24 to 33.

38. A communication device comprising a processor and an interface circuit, wherein
the interface circuit is configured to receive code instructions and send the code instructions to the processor; and
the processor is configured to execute the code instructions to perform the method according to any one of claims 1 to 23 or 24 to 33.

39. A computer-readable storage medium having instructions stored thereon that, when being executed, enable the method according to any one of claims 1 to 23 or 24 to 33 to be implemented.
